# EUROPEAN PATENT SPECIFICATION

(11) **EP 2 267 083 B1**
(45) Date of publication and mention of the grant of the patent: **21.06.2017**
(21) Application number: 09719137.3
(22) Date of filing: 10.03.2009
(51) Int. Cl.: C08L 101/10, C08K 5/101, C08K 5/31, C09J 11/06, C09J 171/02, C09K 3/10

(54) **CURABLE COMPOSITION AND CURED MATERIAL**
HÄRTBARE ZUSAMMENSETZUNG UND GEHÄRTETES MATERIAL
COMPOSITION POUVANT DURCIR ET MATÉRIAU DURCI

(30) Priority: 13.03.2008 JP 2008064956
(43) Date of publication of application: 29.12.2010
(73) Proprietor: KANEKA CORPORATION, Osaka (JP)
(72) Inventor: NORO, Noriko, Takasago-shi Hyogo 651-2137 (JP); OKAI, Jiro, Settsu-shi Osaka 566-0072 (JP); YANO, Ayako, Takasago-shi Hyogo 651-2137 (JP)
(74) Representative: Hart-Davis, Jason
(86) International application number: PCT/JP2009/054546
(87) International publication number: WO 2009/113538

(56) References cited:
- EP-A1- 1 586 605
- WO-A1-2007/094272
- WO-A1-2007/094273
- WO-A1-2007/094276
- JP-A- 2005 248 175
- JP-A- 2006 131 651
- JP-A- 2007 039 568

## Description

### TECHNICAL FIELD

The present invention relates to a curable composition comprising one or more organic polymers having a silicon-containing group which has a hydroxyl group or hydrolyzable group bonded to a silicon atom and can form a siloxane bond to be cross-linked (hereinafter referred to also as a "reactive silyl group").

### BACKGROUND ART

Organic polymers containing at least one reactive silyl group in each molecule are known to have properties such that they are cross-linked by siloxane bond formation involving reactions such as hydrolysis of the reactive silyl group due to moisture or the like, even at room temperature to provide rubbery cured products.

Among these reactive silyl group-containing polymers, those polymers which have a main chain skeleton of a polyoxyalkylene polymer or a polyisobutylene polymer are disclosed in Patent Documents 1 and 2, and the like. These polymers have already been industrially produced and used in various applications such as sealants, adhesives, and coatings.

Curable compositions containing these reactive silyl group-containing organic polymers further contain a silanol condensation curing catalyst in order to provide cured products. Common examples of the silanol condensation curing catalyst include organotin compounds having a carbon-tin bond, such as dibutyltin bis(acetylacetonate) and dibutyltin dilaurate. In recent years, however, organotin compounds are known to be toxic, and the development of non-organotin curing catalysts has been desired.

Patent Documents 3, 4, 5, 6, and 7 disclose tin carboxylates and other metal carboxylates as curing catalysts. These documents also disclose that addition of an amine compound as a promoter to such curing catalysts improves curability. In addition, Patent Document 8 discloses that combination use of an amine compound and a carboxylic acid provides a metal-free curing catalyst with reduced environmental load. In the case of the non-organotin curing catalysts disclosed in the above patent documents, however, more problems arise such as poorer adhesiveness than in the case of organotin curing catalysts.

In addition, WO 2007/094273 discloses compositions comprising a silyl group-bearing organic polymer, an amidine compound as silanol condensation catalyst and a carboxylic acid. EP 1 586 605 discloses compositions comprising a silyl group-bearing organic polymer which contains methyl acrylate residues, as well as ones comprising a silyl group-bearing organic polymer and a separate methyl ester group-containing compound.

As mentioned above, it is known that combination use of an amine compound with other curing catalysts causes improved curability, but there are disclosed few cases in which only an amine compound is used as a curing catalyst. Patent Documents 9 and 10 disclose techniques in which a guanidine compound with a specified structure is used as a curing catalyst. In the case that such a guanidine compound is used as a curing catalyst, however, the curable composition disadvantageously shows deteriorated curability after storage in some cases.

Patent Document 11 discloses a technique in which a methyl ester group-containing compound is added to a reactive silyl group-containing vinyl polymer and thereby the curability of the curable composition is less deteriorated after storage. In this case, disclosed examples of a curing catalyst include conventionally known guanidine compounds and amidine compounds, such as guanidine, diphenylguanidine, and 1,8-diazabicyclo(5.4.0)undecene-7(DBU); however, guanidine is an unstable compound and is not appropriate for a curing catalyst. In addition, guanidine compounds with multiple aryl groups substituted therein, such as diphenylguanidine, are likely to have poor activity as a curing catalyst, as mentioned in Patent Documents 9 and 10. In the case that amidine compounds, such as DBU, are used as a silanol condensation catalyst, they cause bleed-out or insufficient curability and adhesiveness in some cases. In the examples of Patent Document 11, only an organotin curing catalyst is used, and no examples are mentioned in which a guanidine compound or an amidine compound is used as a curing catalyst.

Patent Document 12 discloses a technique in which a guanidine compound is used as a curing catalyst for an organic polymer with a specified structure to ensure sufficient curability, and a polyether plasticizer, such as polypropylene glycol, is used together to cause the curability of the curable composition to be less deteriorated after storage. As is evident from the examples of Patent Document 12, however, a polyether plasticizer is likely to cause slower curing before storage than a phthalate ester plasticizer although the curability of the curable composition is maintained before and after storage. That is, further improvement is required in order to achieve good curability and storage stability (properties of the curable composition that the curability is not decreased after storage) in the case that a guanidine compound is used as a curing catalyst.
Patent Document 1: Japanese Kokai Publication S52-73998
Patent Document 2: Japanese Kokai Publication S63-6041
Patent Document 3: Japanese Kokai Publication H05-39428
Patent Document 4: Japanese Kokai Publication H09-12860
Patent Document 5: Japanese Kokai Publication 2000-313814
Patent Document 6: Japanese Kokai Publication 2000-345054
Patent Document 7: Japanese Kokai Publication 2003-206410
Patent Document 8: Japanese Kokai Publication H05-117519
Patent Document 9: Japanese Kokai Publication 2005-248175
Patent Document 10: WO 2007/094276
Patent Document 11: Japanese Kokai Publication 2006-131651
Patent Document 12: WO 2007/094272

### SUMMARY OF THE INVENTION

An object of the present invention is to provide a curable composition comprising a reactive silyl group-containing organic polymer, which is free from organotin compounds known to be toxic as a silanol condensation catalyst, is excellent in curability, and is also excellent in storage stability.

The present inventors have performed studies in order to solve the above problems, and have found that combination use of a guanidine compound with a specified structure and a methyl ester group-containing compound provides a curable composition excellent in curability and storage stability. Thus, the present inventors have completed the present invention.

The present invention relates to:
(I). a curable composition comprising:
   (A) an organic polymer as defined in appended claim 1 having a silyl group cross-linkable by siloxane bond formation;
   (B) a guanidine compound represented by formula (1):

      R¹N=C(NR¹₂)₂ (1)

      wherein any one of five R¹s is an organic group, and the other four R¹s are each independently one selected from a hydrogen atom; a saturated hydrocarbon group; -C(=NR²)-NR²₂ wherein three R²s are each independently a hydrogen atom or an organic group; and =C(-NR²₂)₂ wherein four R²s are each independently a hydrogen atom or an organic group; and
   (C) a methyl ester group-containing compound as defined in appended claim 1;
(II). the curable composition of mode (I), further comprising (D) a phthalate ester plasticizer;
(III). the curable composition of mode (I) or (II), wherein the organic polymer (A) has a polyoxyalkylene polymer as a main chain skeleton;
(IV). the curable composition of mode (III), wherein the polyoxyalkylene polymer is a polyoxypropylene polymer;
(V). the curable composition of any one of modes (I) to (IV), wherein the guanidine compound (B) has an aryl group as any one of the five R¹s in formula (1);
(VI). the curable composition of mode (V), wherein the guanidine compound (B) is at least one selected from the group consisting of 1-phenylguanidine, 1-(o-tolyl)guanidine, 1-phenylbiguanide, and 1-(o-tolyl)biguanide;
(VII). the curable composition of any one of modes (I) to (VI), wherein the methyl ester group-containing compound (C) has a molecular weight of 100 to 500;
(VIII). the curable composition of any one of modes (I) to (VII), wherein the methyl ester group-containing compound (C) has a primary carbon atom or a secondary carbon atom at an α-position of the methyl ester group;
(IX). the curable composition of any one of modes (I) to (VIII), wherein the methyl ester group-containing compound (C) is at least one selected from the group consisting of dimethyl malonate, dimethyl succinate, dimethyl glutarate, dimethyl adipate, dimethyl sebacate, methyl acetate, methyl propionate, methyl butyrate, methyl valerate, methyl caprylate, methyl caprate, methyl laurate, methyl myristate, methyl palmitate, methyl stearate, methyl oleate, methyl ricinoleate, and methyl cocoate;
(X). a sealant, comprising the curable composition of any one of modes (I) to (IX);
(XI). an adhesive, comprising the curable composition of any one of modes (I) to (IX); and
(XII). a cured product, which is produced from the curable composition of any one of modes (I) to (IX).

The curable composition of the present invention is excellent in environmental suitability because it is free from organotin compounds known to be toxic according to recent studies. The guanidine compound with a specified structure effectively acts as a curing catalyst for the reactive silyl group-containing organic polymer and thus provides a curable composition excellent in curability. In addition, addition of the methyl ester compound prevents retardation in the curability of the curable composition after storage and provides a curable composition having good curability which is maintained before and after storage.

### BEST MODE FOR CARRYING OUT THE INVENTION

The following will describe the present invention in detail.

The curable composition of the present invention essentially comprises a reactive silyl group-containing organic polymer (A).

The organic polymer (A) has one or more reactive silyl group per molecule on average. Here, the reactive silyl group is an organic group having a hydroxy group or hydrolyzable group bonded to a silicon atom.

The reactive silyl group-containing organic polymer (A) forms a siloxane bond owing to a reaction accelerated by a silanol condensation curing catalyst and is thereby crosslinked.

Examples of the reactive silyl group include a group represented by formula (2):

-SiR³_{b}X¹_{3-b} (2)

wherein the b R³s each independently represent at least one selected from the group consisting of a C1-C20 alkyl group, a C6-C20 aryl group, a C7-C20 aralkyl group, and a triorganosiloxy group represented by -OSi(R')₃ (wherein R's each independently represent a C1-C20 hydrocarbon group); the (3-b) X¹s each independently represent a hydroxy group or a hydrolyzable group; and b is an integer of 0 to 2.

The curable composition of the present invention mainly comprises the reactive silyl group-containing organic polymer (A) and is more compatible with the guanidine compound (B) serving as a curing catalyst in comparison with one mainly comprising an inorganic polymer such as polydimethyl siloxane, and thereby has excellent curability and adhesiveness.

The main chain skeleton of the organic polymer (A) in the present invention is a polyoxyalkylene as defined in appended claim 1. As for general main chain skeletons of organic polymer (A) in the present disclosure, examples thereof include: polyoxyalkylene polymers such as polyoxyethylene, polyoxypropylene, polyoxybutylene, polyoxytetramethylene, polyoxyethylene-polyoxypropylene copolymers, and polyoxypropylene-polyoxybutylene copolymers; hydrocarbon polymers such as ethylene-propylene copolymers, polyisobutylene, copolymers of isobutylene and isoprene or a like monomer, polychloroprene, polyisoprene, copolymers of isoprene or butadiene with acrylonitrile and/or styrene or a like monomer, polybutadiene, and copolymers of isoprene or butadiene with acrylonitrile and styrene or a like monomer, and hydrogenated polyolefin polymers derived from hydrogenation of these polyolefin polymers; polyester polymers obtained by condensation of a dibasic acid such as adipic acid and a glycol, and obtained by ring-opening polymerization of lactones; (meth)acrylate polymers obtained by radical polymerization of compounds such as ethyl (meth)acrylate and butyl (meth)acrylate; vinyl polymers obtained by radical polymerization of compounds such as (meth)acrylate ester compounds, vinyl acetate, acrylonitrile, and styrene; graft polymers obtained by polymerizing a vinyl compound in such polymers as mentioned above; polysulfide polymers; polyamide polymers such as polyamide 6 produced by ring-opening polymerization of ε-caprolactam, polyamide 6/6 produced by polycondensation of hexamethylenediamine and adipic acid, polyamide 6/10 produced by polycondensation of hexamethylenediamine and sebacic acid, polyamide 11 produced by polycondensation of ε-aminoundecanoic acid, polyamide 12 produced by ring-opening polymerization of ε-aminolaurolactam, and copolymer polyamides containing multiple species of the aforementioned polyamides; polycarbonate polymers such as polycarbonates produced by polycondensation of bisphenol A and carbonyl chloride; diallyl phthalate polymers; and other organic polymers.

For saturated hydrocarbon polymers, such as polyisobutylene, hydrogenated polyisoprene, and hydrogenated polybutadiene, polyoxyalkylene polymers, and (meth)acrylate polymers, the organic polymer (A) having such a main chain skeleton has a relatively low glass transition temperature and the cured product to be provided is allowed to have excellent cold resistance.

The glass transition temperature of the reactive silyl group-containing organic polymer (A) is not particularly limited. It is preferably 20°C or lower, more preferably 0°C or lower, and particularly preferably -20°C or lower. If the glass transition temperature is higher than 20°C, the curable composition may have a high viscosity in winter or in cold districts, and thus the workability is likely to be poor. In addition, the cured product to be provided is likely to have deteriorated flexibility and thus have poor elongation.

The glass transition temperature may be determined by the DSC measurement in accordance with the method in JIS K 7121.

When a curable composition mainly comprising an organic
polymer whose main chain skeleton is a saturated hydrocarbon polymer, a polyoxyalkylene polymer, or a (meth)acrylate polymer, is used as an adhesive or sealant, because low-molecular-weight components are less likely to transfer (i.e. stain) to adherends.

An organic polymer whose main chain skeleton is a polyoxyalkylene polymer according to the present invention or a (meth)acrylate polymer according to the present disclosure have high moisture permeability, and when used as a main component of a one-pack type adhesive or sealant, is excellent in depth curability and provides a cured product excellent in adhesiveness.

The polyoxyalkylene polymer to be used as the main chain skeleton of the organic polymer (A) is a polymer having a repeating unit represented by formula (3):

-R⁴-O- (3)

wherein R⁴ is a C1-C14 linear or branched alkylene group.

R⁴ in formula (3) is not particularly limited as long as it is a C1-C14 linear or branched alkylene group. In particular, a C2-C4 linear or branched alkylene group is preferable.

The repeating unit defined by formula (3) is not particularly limited. Examples thereof include: -CH₂O-, - CH₂CH₂O-, -CH₂CH(CH₃)O-, -CH₂CH(C₂H₅)O-, -CH₂C(CH₃)₂O-, and - CH₂CH₂CH₂CH₂O-.

The polyoxyalkylene polymer may have one repeating unit or multiple repeating units. In applications such as sealants, in particular, the organic polymer (A) preferably mainly contains a propylene oxide polymer as the main chain skeleton because such an organic polymer (A) is noncrystalline and has a relatively low viscosity.

Such a polyoxyalkylene polymer may be produced by any method including conventionally known methods. Examples thereof include: a method with an alkali catalyst such as KOH; a method in which a transition metal compound-porphyrin complex, such as a complex obtained by the reaction between an organoaluminum compound and porphyrin, is used as a catalysts, as disclosed in JP-A S61-215623; methods in which a double metal cyanide complex is used as a catalyst, as disclosed in JP-B S46-27250 and S59-15336, and US 3,278,457, 3,278,458, 3,278,459, 3,427,256, 3,427,3344, and 3,427,335 and other documents; a method in which a polyphosphazene salt is used as a catalyst, as disclosed in JP-A H10-273512; and a method in which a phosphazene compound is used as a catalyst, as disclosed in JP-A H11-060722.

A reactive silyl group-containing polyoxyalkylene polymer may be produced by any method including conventionally known methods. Examples thereof include: methods disclosed in JP-B S45-36319 and S46-12154, JP-A S50-156599, S54-6096, S55-13767, S55-13468, and S57-164123, JP-B H03-2450, and US 3,632,557, 4,345,053, 4,366,307, and 4, 960, 844 and other documents; and methods providing a polymer with a high molecular weight (number average molecular weight of 6,000 or higher) and a narrow molecular weight distribution (Mw/Mn of 1.6 or below) as disclosed in JP-A S61-197631, S61-215622, S61-215623, S61-218632, H03-72527, H03-47825, and H08-231707 and other documents.

The reactive silyl group-containing polyoxyalkylene polymers may be added alone or may be added in combination to the curable composition.

The saturated hydrocarbon polymer as the main chain skeleton of an organic polymer according to the present disclosure is a polymer that is substantially free from any carbon-carbon unsaturated bond except an aromatic ring in each molecule. Such a polymer is excellent in heat resistance, weather resistance, durability, and moisture barrier property.

The saturated hydrocarbon polymer according to the present disclosure is not particularly limited. Examples thereof include: (i) polymers comprising a C2-C6 olefin compound, such as ethylene, propylene, 1-butene, or isobutylene, as a repeating unit; (ii) polymers comprising a diene compound, such as butadiene or isoprene, as a repeating unit; and (iii) polymers obtained by copolymerization of the aforementioned diene compound and olefin compound, and hydrogenation of the obtained copolymer. In particular, for isobutylene polymers and hydrogenated polybutadiene polymers, functional groups are easily introduced into the ends of these polymers, their molecular weights are easily controlled, and the number of terminal functional groups can.be adjusted.

The isobutylene polymers may be ones in which all of the repeating units are derived from isobutylene or may be copolymers of isobutylene with other compounds. In the case that an isobutylene copolymer is the main chain skeleton, the polymer may appropriately have 50% by weight or more, 80% by weight or more, and 90 to 99% by weight, of an isobutylene-derived repeating unit per molecule because the cured product to be provided has excellent rubber properties.

The saturated hydrocarbon polymer may be produced by any method including conventionally known polymerization methods including the living polymerization method which has been remarkably developed in recent years. Examples of the method for producing an isobutylene polymer by the living polymerization include the Inifer polymerization found by Kennedy et al. (J. P. Kennedy et al., J. Polymer Sci., Polymer Chem. Ed., 1997, vol. 15, p. 2843). This polymerization method is known to enable introduction of various functional groups into molecular ends and provide isobutylene polymers having a molecular weight of about 500 to 100,000 with a molecular weight distribution of not broader than 1.5.

A reactive silyl group-containing saturated hydrocarbon polymer may be produced by any method including conventionally known methods. Examples thereof include methods disclosed in JP-B H04-69659 and H07-108928, JP-A S63-254149, S64-22904, and H01-197509, JP-B 2539445 and 2873395, JP-A H07-53882 and other documents.

The reactive silyl group-containing saturated hydrocarbon polymers may be added alone, or may be added in combination to the curable composition.

The (meth)acrylate polymer as the main chain skeleton of an organic polymer according to the present disclosure is a polymer comprising a (meth)acrylate compound as a repeating unit. The term "(meth)acrylate" herein refers to an acrylic acid ester and/or a methacrylic acid ester, and has the same meaning also in the following description.

The (meth)acrylate compound as a repeating unit is not particularly limited. Examples thereof include: (meth)acrylic acid compounds such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, γ-(methacryloyloxypropyl)trimethoxysilane, γ-(methacryloyloxypropyl)dimethoxymethylsilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethylmethyl) (methacrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

The (meth)acrylate polymers include copolymers of a (meth)acrylate compound and a vinyl compound copolymerizable therewith.

The vinyl compound is not particularly limited. Examples thereof include: styrene compounds such as styrene, vinyltoluene, α-methylstyrene, chlorostyrene, and styrenesulfonic acid and salts thereof; silyl group-containing vinyl compounds such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide compounds such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl compounds such as acrylonitrile and methacrylonitrile; amido group-containing vinyl compounds such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, allyl chloride, and allyl alcohol. A plurality of these may be used in combination as comonomers.

The (meth)acrylate polymers obtained from the aforementioned compounds may appropriately comprise organic polymers comprising, as the main chain skeleton, a copolymer of a styrene compound and a (meth)acrylate compound because such an organic polymer provides a cured product having excellent physical properties; organic polymers comprising, as the main chain skeleton, a copolymer of an acrylate compound and a methacrylate compound; and organic polymers comprising, as the main chain skeleton, a polymer of an acrylate compound.

For applications such as general architectural applications, the curable composition is required to have a low viscosity, and the cured product to be provided therefrom is required to have a low modulus, high elongation, high weather resistance, and high heat resistance, in particular.

In order to satisfy these requirements, the main chain skeleton of an organic polymer according to the present disclosure may appropriately comprise a polymer derived from a butyl acrylate compound.

For applications such as automobile applications, the cured product to be provided is required to be excellent in properties such as oil resistance.

In order to provide the cured product having excellent oil resistance, the main chain skeleton of an organic polymer according to the present disclosure may appropriately comprise a copolymer mainly derived from ethyl acrylate.

In the case that the curable composition comprises an organic polymer comprising, as the main chain skeleton, such a copolymer mainly derived from ethyl acrylate, the cured product provided is likely to have slightly poor low-temperature properties (cold resistance) while having excellent oil resistance. In order to improve the low-temperature properties, some ethyl acrylates may be replaced with butyl acrylates. As the proportion of butyl acrylate is increased, however, the good oil resistance is likely to be impaired. Thus, the proportion thereof may appropriately be 40% or lower, and 30% or lower, in the applications requiring good oil resistance.

In order to improve properties such as the low-temperature properties without impairment of the oil resistance, it may also be appropriate to use, as a comonomer, a compound such as 2-methoxyethyl acrylate or 2-ethoxyethyl acrylate in which an oxygen atom is introduced in the side chain alkyl group.

Here, the cured product provided is likely to have poor heat resistance due to introduction of an alkoxy group having an ether bond in the side chain. Thus, the proportion of such a compound may appropriately be 40% or lower in the applications requiring good heat resistance.

As mentioned above, an organic polymer comprising, as the main chain skeleton, a copolymer mainly derived from ethyl acrylate can be optimized according to various uses and requirements by appropriate selection of comonomers and adjustment of the proportion thereof in consideration of physical properties, such as oil resistance, heat resistance, and low-temperature properties, which are required for the cured product to be provided. For example, without any limitative meaning, copolymers of ethyl acrylate, butyl acrylate, and 2-methoxyethyl acrylate (weight ratio: 40-50/20-30/30-20) have an excellent balance among physical properties such as oil resistance, heat resistance, and low-temperature properties.

These compounds may be copolymerized or even block-copolymerized with another compound. In such a case, a copolymer produced may appropriately contain these compounds in an amount of 40% by weight or more.

The (meth)acrylate polymer according to the present disclosure may be produced by any method including conventionally known methods, including the living radical polymerization because this method enables cross-linkable functional groups to be easily introduced in a high proportion into a molecular chain end and provides a polymer having a narrow molecular weight distribution and a low viscosity.

Here, ordinary free radical polymerization, in which a compound such as an azo compound or a peroxide is used as a polymerization initiator, is likely to provide a polymer generally having a molecular weight distribution value as high as not lower than 2 and a higher viscosity.

For producing a (meth)acrylate polymer containing a specific functional group, among the methods for producing (meth)acrylate polymers by the aforementioned "living radical polymerization", in the "atom transfer radical polymerization" in which a substance such as an organic halide or sulfonyl halide compound is used as an initiator and a transition metal complex is used as a catalyst, the atom transfer radical polymerization gives a high degree of freedom in selecting an initiator and a catalyst, and provides a polymer terminally having a halogen or the like group which is relatively advantageous to functional-group exchange reactions, as well as has the properties of the "living radical polymerization", that is, providing a polymer with a narrow molecular weight distribution and a low viscosity. Examples of the atom transfer radical polymerization include the method described in Matyjaszewski et al., Journal of the American Chemical Society (J. Am. Chem. Soc.), 1995, vol. 117, p. 5614.

A reactive silyl group-containing (meth)acrylate polymer may be produced by any method. Examples thereof include the free radical polymerization with a chain transfer agent, as disclosed in JP-B H03-14068 and H04-55444, JP-A H06-211922 and other documents; and the atom transfer radical polymerization as disclosed in JP-A H09-272714 and other documents.

A (meth)acrylate copolymer derived from multiple species of the aforementioned (meth)acrylate compounds may be used as the main chain skeleton of an organic polymer according to the present disclosure.

Specific examples of the (meth)acrylate copolymer derived from multiple species of the (meth)acrylate compounds include copolymers whose main chain skeleton substantially comprises: a repeating unit having a C1-C8 alkyl group represented by formula (4):

-CH_{Z}-C(R⁵) (COOR⁶)- (4)

wherein R⁵ is a hydrogen atom or a methyl group, and R⁶ is a C1-C8 alkyl group; and a repeating unit having an alkyl group containing 9 or more carbon atoms represented by formula (5):

-CH₂-C(R⁵)(COOR⁷)- (5)

wherein R⁵ is as defined in formula (4), and R⁷ is an alkyl group containing 9 or more carbon atoms.

R⁶ in formula (4) is not particularly limited as long as it is a C1-C8 alkyl group. Examples thereof include a methyl group, an ethyl group, a propyl group, an n-butyl group, a t-butyl group, and a 2-ethylhexyl group, C1-C4 alkyl groups, C1 and C2 alkyl groups. R⁶ in the copolymer is not necessarily limited to one alkyl group species.

R⁷ in formula (5) is not particularly limited as long as it is an alkyl group containing 9 or more carbon atoms. Examples thereof include a lauryl group, a tridecyl group, a cetyl group, a stearyl group, and a behenyl groups, C10-C30 alkyl groups, C10-C20 long-chain alkyl groups. R⁷ in the copolymer is not necessarily limited to one alkyl group species.

The (meth)acrylate copolymer substantially comprises the repeating units defined by formulas (4) and (5). The term "substantially" herein means that the total amount of the repeating units defined by formulas (4) and (5) in the copolymer is more than 50% by weight. The total amount of the repeating units defined by formulas (4) and (5) in the copolymer may appropriately be 70% by weight or more.

The ratio between the repeating units of formulas (4) and (5) in the copolymer may appropriately be 95:5 to 40:60, and 90:10 to 60:40 in terms of the weight ratio (formula (4): formula (5)).

The (meth)acrylate copolymers include a copolymer of (meth)acrylate compounds used as the repeating units defined by formulas (4) and (5) and a vinyl compound copolymerizable therewith.

Examples of the vinyl compound include: acrylic acids such as acrylic acid and methacrylic acid; amido group-containing compounds such as acrylamide, methacrylamide, N-methylolacrylamide, and N-methylolmethacrylamide; epoxy group-containing compounds such as glycidyl acrylate and glycidyl methacrylate; amino group-containing compounds such as diethylaminoethyl acrylate, diethylaminoethyl methacrylate, and aminoethyl vinyl ether; and other compounds such as acrylonitrile, styrene, α-methylstyrene, alkyl vinyl ethers, vinyl chloride, vinyl acetate, vinyl propionate, and ethylene.

The main chain skeleton of the organic polymer (A) may contain another repeating unit having, for example, a urethane bond as long as the effects of the present invention are not significantly lessened thereby, if necessary.

The urethane bond-containing repeating unit is not particularly limited. Examples thereof include a repeating unit having a group formed by the reaction between an isocyanato group and an active hydrogen group (hereinafter, the group thus formed is also referred to as an "amide segment").

The amide segment is an organic group represented by formula (6):

-NR⁸-C(=O)- (6)

wherein R⁸ is a hydrogen atom or an organic group.

The amide segment is not particularly limited. Examples thereof include: a urethane group formed by the reaction between an isocyanato group and a hydroxy group; a urea group formed by the reaction between an isocyanato group and an amino group; and a thiourethane group formed by the reaction between an isocyanato group and a mercapto group.

The definition of the "amide segment" herein also includes therein organic groups formed by the reactions of active hydrogen in a urethane group, a urea group, and a thiourethane group with isocyanato groups.

The reactive silyl group-containing organic polymer having an amide segment in the main chain skeleton may be produced by any method. Examples thereof include a method comprising the steps of: reacting an organic polymer having an active hydrogen-containing organic group at an end thereof with an excessive amount of a polyisocyanate compound to provide a polymer having an isocyanato group at a polyurethane main chain end; and, thereafter or simultaneously therewith, reacting all or part of the isocyanato groups in the polymer with a group W in a silicon compound represented by formula (7):

W-R⁹-SiR¹⁰_{3-c}X²_{c} (7)

wherein R⁹ is a bivalent organic group, and more preferably a C1-C20 bivalent hydrocarbon group; the (3-c) R¹⁰s each are a hydrogen atom or an organic group; the c X²s each are a hydroxy group or a hydrolyzable group; c is an integer of 1, 2, or 3; and W is a group containing at least one active hydrogen selected from the group consisting of a hydroxy group, a carboxyl group, a mercapto group, and a (primary or secondary) amino group. Such a method is disclosed in Patent Documents such as JP-B S46-12154 (US 3,632,557); JP-A S58-109529 (US 4,374,237), S62-13430 (US 4,645,816), H08-53528 (EP 0676403), and H10-204144 (EP 0831108); JP-T 2003-508561 (US 6,197,912); JP-A H06-211879 (US 5,364,955), H10-53637 (US 5,756,751), H11-100427, 2000-169544, 2000-169545, and 2002-212415; JP-B 3,313,360; US 4,067,844 and 3,711,445; and JP-A 2001-323040.

In addition, examples thereof further include a method comprising the step of reacting an active hydrogen-containing group at an end of the organic polymer with an isocyanato group of a reactive silyl group-containing isocyanate compound represented by formula (8):

O=C=N-R⁹-SiR¹⁰_{3-c}X²_{c} (8)

wherein R⁹, R¹⁰, X², and c are as defined in formula (7). Such a method is disclosed in Patent Documents such as JP-A H11-279249 (US 5,990,257), 2000-119365 (US 6,046,270), S58-29818 (US 4,345,053), H03-47825 (US 5,068,304), H11-60724, 2002-155145, and 2002-249538; WO 03/018658, and WO 03/059981.

The organic polymer having an active hydrogen-containing group at an end thereof is not particularly limited. Examples thereof include hydroxy-terminated oxyalkylene polymers (polyether polyols), polyacrylic polyols, polyester polyols, hydroxy-terminated saturated hydrocarbon polymers (polyolefin polyols), polythiol compounds, and polyamine compounds.

In particular, organic polymers comprising a polyether polyol, a polyacrylic polyol, or a polyolefin polyol in the main chain skeleton are preferable because such polymers have a relatively low glass transition temperature and provide a cured product having excellent cold resistance.

Particularly preferable are organic polymers containing a polyether polyol because they have a low viscosity and good workability, and provide a cured product having good depth curability and adhesiveness. The curable composition more preferably comprises an organic polymer containing a polyacrylic polyol or a saturated hydrocarbon polymer because such a curable composition provides a cured product having good weather resistance and heat resistance.

The polyether polyol preferably has at least 0.7 terminal hydroxy groups per molecule on average.

The production method thereof is not particularly limited and may be any conventionally known method. Examples thereof include: polymerization with an alkali metal catalyst; and polymerization of an alkylene oxide in which a polyhydroxy compound having at least two hydroxy groups per molecule is used as an initiator in the presence of a double metal cyanide complex or cesium.

Preferable among the aforementioned polymerization methods is the polymerization with a double metal cyanide complex because it provides a polymer having a low degree of unsaturation, a narrow molecular weight distribution (Mw/Mn),- and a low viscosity, and the cured product to be provided is allowed to have excellent acid resistance and weather resistance.

The term "polyacrylic polyol" refers to a polyol containing a (meth)acrylic acid alkyl ester (co)polymer as the skeleton thereof and having a hydroxy group in the molecule.

The production method thereof is preferably the living radical polymerization, and more preferably the atom transfer radical polymerization because such methods provide polymers having a narrow molecular weight distribution and a low viscosity. Also preferable is polymerization by the so-called SGO process in which an acrylic acid alkyl ester compound is continuously bulk-polymerized under high-temperature and high-pressure conditions, as disclosed in JP-A 2001-207157. Examples of the polyacrylic polyol include ARUFON UH-2000 produced by Toagosei Co., Ltd.

The polyisocyanate compound is not particularly limited. Examples thereof include: aromatic polyisocyanates such as toluene(tolylene)diisocyanate, diphenylmethane diisocyanate, and xylylene diisocyanate; and aliphatic polyisocyanates such as isophorone diisocyanate and hexamethylene diisocyanate.

The silicon compound of formula (7) is not particularly limited. Examples thereof include: amino group-containing silane compounds such as γ-aminopropyltrimethoxysilane, N-(β-aminoethyl)-γ-aminopropyltrimethoxysilane, (N-phenyl)-γ-aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxy group-containing silane compounds such as γ-hydroxypropyltrimethoxysilane; and mercapto group-containing silane compounds such as γ-mercaptopropyltrimethoxysilane.

Examples of the silicon compound of formula (7) further include Michael addition products derived from various α,β-unsaturated carbonyl compounds and primary amino group-containing silane compounds, and Michael addition products derived from various (meth)acryloyl group-containing silane compounds and primary amino group-containing compounds. Such products are disclosed in JP-A H06-211879 (US 5,364,955), H10-53637 (US 5,756,751), H10-204144 (EP 0831108), 2000-169544, and 2000-169545.

The reactive silyl group-containing isocyanate compound of formula (8) is not particularly limited. Examples thereof include: γ-trimethoxysilylpropyl isocyanate, γ-triethoxysilylpropyl isocyanate, γ-methyldimethoxysilylpropyl isocyanate, γ-methyldiethoxysilylpropyl isocyanate, trimethoxysilylmethyl isocyanate, triethoxymethylsilylmethyl isocyanate, dimethoxymethylsilylmethyl isocyanate, and diethoxymethylsilylmethyl isocyanate.

Examples of the reactive silyl group-containing isocyanate compound of formula (8) further include reaction products derived from the silicon compound of formula (7) and an excessive amount of a polyisocyanate compound, as disclosed in JP-A 2000-119365 (US 6,046,270).

The hydrolyzable group represented by X in formula (2) is not particularly limited, and may be any conventionally known hydrolyzable group. Examples thereof include a hydrogen atom, a halogen atom, an alkoxy group, an acyloxy group, a ketoxymato group, an amino group, an amido group, an acid amido group, an aminooxy group, a mercapto group, and an alkenyloxy group. Preferable among these are a hydrogen atom, an alkoxy group, an acyloxy group, a ketoxymato group, an amino group, an amido group, an aminooxy group, a mercapto group, and an alkenyloxy group. More preferable is an alkoxy group because it contributes to mild hydrolysis and is easy to handle.

One silicon atom can have one to three groups selected from a hydrolyzable group or a hydroxy group bound thereto. In the case that two or more groups selected from a hydrolyzable group or a hydroxy group are bonded to a silicon atom in the reactive silyl group, these groups may be the same as or different from each other.

R³ in formula (2) is not particularly limited. Examples thereof include: alkyl groups such as a methyl group and an ethyl group; cycloalkyl groups such as a cyclohexyl group; aryl groups such as a phenyl group; and aralkyl groups such as a benzyl group. Preferable among these is a methyl group.

The reactive silyl group of formula (2) is not particularly limited. Examples thereof include a trimethoxysilyl group, a triethoxysilyl group, a triisopropoxysilyl group, a dimethoxymethylsilyl group, a diethoxymethylsilyl group, a diisopropoxymethylsilyl group, a methoxydimethylsilyl group, and an ethoxydimethylsilyl group. Preferable among these are a trimethoxysilyl group, a triethoxysilyl group, and a dimethoxymethylsilyl group, and more preferable is a trimethoxysilyl group because such groups have high activity and contribute to good curability.

A dimethoxymethylsilyl group is particularly preferable in that it gives good curability and storage stability to the curable composition. A triethoxysilyl group is particularly preferable in that an alcohol produced through hydrolysis of the reactive silyl group in this case is ethanol which is a highly safe alcohol.

The reactive silyl group may be introduced by any method including conventionally known methods. Examples thereof include the following methods (i) to (iii).
(i) A polymer having a functional group such as a hydroxy group in each molecule is allowed to react with an organic compound having an unsaturated group and an active group that is reactive with the functional group to provide an unsaturated group-containing polymer. Alternatively, the functional group-containing polymer is allowed to copolymerize with an unsaturated group-containing epoxy compound to provide an unsaturated group-containing polymer. Then, the reaction product is allowed to react with a reactive silyl group-containing hydrosilane for hydrosilylation.
(ii) The unsaturated group-containing organic polymer provided through the same manner as in the method (i) is allowed to react with a compound having a mercapto group and a reactive silyl group.
(iii) An organic polymer having a functional group such as a hydroxy group, an epoxy group or an isocyanato group in each molecule is allowed to react with a compound having a reactive silyl group and a functional group that is reactive with the above functional group.

Preferable among these is the method (i) or the method (iii) in such a mode that a hydroxy-terminated polymer is allowed to react with a compound having an isocyanato group and a reactive silyl group because such methods achieve a high conversion rate in a relatively short period of time. More preferable is the method (i). This is because the curable composition mainly comprising the reactive silyl group-containing organic polymer produced by the method (i) is likely to have a lower viscosity than that of the curable composition mainly comprising the organic polymer produced by the method (iii) and thus the workability of the former curable composition is better; and the organic polymer produced by the method (ii) has a stronger odor due to mercaptosilane than the organic polymer produced by the method (i).

The hydrosilane compound to be used in the method (i) is not particularly limited. Examples thereof include: halogenated hydrosilanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, phenyldimethoxysilane, and 1-[2-(trimethoxysilyl)ethyl]-1,1,3,3-tetramethyldisiloxane; acyloxyhydrosilanes such as methyldiacetoxysilane and phenyldiacetoxysilane; and ketoxymatehydrosilanes such as bis(dimethylketoxymate)methylsilane and bis(cyclohexylketoxymate)methylsilane. In particular, halogenated hydrosilanes and alkoxyhydrosilanes are preferable. More preferable are alkoxyhydrosilanes because the curable composition mainly comprising the organic polymer (A) to be provided is mildly hydrolyzed and is easy to handle. Preferable among the alkoxyhydrosilanes is methyldimethoxysilane because it is easily available and gives excellent properties (such as curability, storage stability, elongation property, and tensile strength) to the curable composition mainly comprising the organic polymer (A) to be provided and its cured product.

The synthesis method (ii) is not particularly limited. Examples thereof include a method in which a mercapto group- and reactive silyl group-containing compound is introduced into an unsaturated-bond moiety of the organic polymer by radical addition reaction in the presence of a radical initiator and/or a radical generation source. The mercapto group- and reactive silyl group-containing compound is not particularly limited. Examples thereof include γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, and mercaptomethyltriethoxysilane.

The method for reacting a hydroxy-terminated polymer with an isocyanato group- and reactive silyl group-containing compound according to one mode of the synthesis method (iii) is not particularly limited. Examples thereof include a method disclosed in JP-A H03-47825. The isocyanato group- and reactive silyl group-containing compound is not particularly limited. Examples thereof include: γ-isocyanatopropyltrimethoxysilane, γ-isocyanatopropylmethyldimethoxysilane, γ-isocyanatopropyltriethoxysilane, γ-isocyanatopropylmethyldiethoxysilane, isocyanatomethyltrimethoxysilane, isocyanatomethyltriethoxysilane, isocyanatomethyldimethoxymethylsilane, and isocyanatomethyldiethoxymethylsilane.

In the case of a silane compound in which three hydrolyzable groups are bonded to one silicon atom, such as trimethoxysilane, disproportionation may rapidly proceed in some cases. As the disproportionation proceeds, dangerous compounds such as dimethoxysilane are generated.

In the case of γ-mercaptopropyltrimethoxysilane and γ-isocyanatopropyltrimethoxysilane, however, such disproportionation will not proceed. Thus, the synthesis method (ii) or (iii) is preferable in the case that a group in which three hydrolyzable groups are bonded to one silicon atom, such as a trimethoxysilyl group, is used as the silyl group.

In the case of a silane compound represented by formula (9):

H-(SiR¹¹₂O)ₙSiR¹¹₂-R¹²-SiX³₃ (9)

wherein three X³s are each independently a hydroxy group or a hydrolyzable group; the (2n+2) R¹¹s are each independently a hydrocarbon group; R¹² is a bivalent organic group; and n is an integer of 0 to 19, disproportionation will not proceed. Thus, the silane compound represented by formula (9) is preferably used in the case of introducing a group in which three hydrolyzable groups are bonded to one silicon atom by the synthesis method (i).

R¹¹ in formula (9) is not particularly limited as long as it is a hydrocarbon group. In particular, C1-C20 hydrocarbon groups are preferable, C1-C8 hydrocarbon groups are more preferable, and C1-C4 hydrocarbon groups are particularly preferable for easy availability and low cost.

R¹² in formula (9) is not particularly limited as long as it is a bivalent organic group. In particular, C1-C12 bivalent hydrocarbon groups are preferable, C2-C8 bivalent hydrocarbon groups are more preferable, and C2 bivalent hydrocarbon groups are particularly preferable for easy availability and low cost.

The symbol n in formula (9) is an integer of 0 to 19, and is preferably 1 for easy availability and low cost.

Examples of the silane compound represented by formula (9) include 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

The reactive silyl group-containing organic polymer (A) may have a linear or branched structure in a molecule. The number average molecular weight thereof is preferably 500 to 100,000, more preferably 1,000 to 50,000, and particularly preferably 3,000 to 30,000 as determined by GPC and expressed on the polystyrene equivalent basis. If the number average molecular weight is lower than 500, the cured product to be provided is likely to be poor in elongation property. If it is higher than 100,000, the curable composition to be provided is likely to have a high viscosity and be poor in workability.

The organic polymer (A) preferably has one or more reactive silyl groups, and more preferably has 1.1 to 5 reactive silyl groups per molecule on average. If the organic polymer (A) has less than one reactive silyl group per molecule on average, the curable composition is likely to have poor curability, and the cured product to be provided is less likely to show a good rubber elastic behavior.

The reactive silyl group may be located at a main chain end or at a side chain end, or at both ends. Particularly in the case that the reactive silyl group is located only at a main chain end, the organic polymer component in the cured product to be provided has an increased effective network size. Thus, a rubber-like cured product having high strength, high elongation, and low elastic modulus is likely to be provided.

The curable composition of the present invention essentially comprises a guanidine compound represented by the following formula (1) as a curing catalyst for the reactive silyl group-containing organic polymer (A).

The guanidine compound with a specified structure as a curing catalyst gives excellent curability to the curable composition even though the guanidine compound is a non-organotin curing catalyst, which is part of an object of the present invention.
Formula (1) :

R¹N=C(NR¹₂)₂ (1)

wherein any one of five R¹s is an organic group, and the other four R¹s are each independently one selected from a hydrogen atom, a saturated hydrocarbon group, -C(=NR²)-NR²₂ (wherein three R²s are each independently a hydrogen atom or an organic group), and =C(-NR²₂)₂ (wherein four R²s are each independently a hydrogen atom or an organic group).

Any one of the five R¹s in formula (1) is an organic group, and the organic group is not particularly limited. Examples thereof include: saturated or unsaturated hydrocarbon groups; organic groups in which at least one hydrogen atom in a hydrocarbon group is substituted by a functional group having at least one selected from a nitrogen atom, an oxygen atom, and a sulfur atom; and groups such as an alkoxy group, a carboxy group, an acyl group, a carbonyl group, an imino group, and a sulfonyl group.

Any one of the five R¹s is preferably an aryl group because such a structure gives good curability and adhesiveness to the curable composition to be provided. The aryl group is not particularly limited. Examples thereof include: a phenyl group, a 2-methylphenyl group, a 3-methylphenyl group, a 4-methylphenyl group, a 2,4-dimethylphenyl group, a 2,6-dimethylphenyl group, a 2,4,6-trimethylphenyl group, a 2-chlorophenyl group, a 3-chlorophenyl group, a 2,4-dichlorophenyl group, a 2,6-dichlorophenyl group, a 2-hydroxyphenyl group, a 4-hydroxyphenyl group, a 2-aminophenyl group, a 4-aminophenyl group, a 2,4-diaminophenyl group, a 4-(dimethylamino)phenyl group, a 4-nitrophenyl group, a 4-cyanophenyl group, a 4-sulfonatophenyl group, a 4-methoxyphenyl group, a 4-ethoxyphenyl group, a 4-benzyloxyphenyl group, a 4-phenoxyphenyl group, a 4-carboxyphenyl group, a 4-acetoxyphenyl group, a 4-benzoylphenyl group, a 4-(ethoxycarbonyl)phenyl group, a 4-(phenoxycarbonyl)phenyl group, a 4-guanidinophenyl group, a 2,4-diguanidinophenyl group, a 4-(acetylamino)phenyl group, a 4-(benzoylamino)phenyl group, a 4-(dimethylaminosulfonyl)phenyl group, a 2-methyl-4-methoxyphenyl group, a 2-methyl-4-nitrophenyl group, 2-methoxy-4-guanidinophenyl group, a 2-methoxy-4-(acetylamino)phenyl group, a naphthyl group, and a biphenyl group.

Preferable among these are a phenyl group, a 2-methylphenyl group, a 3-methylphenyl group, a 4-methylphenyl group, a 4-aminophenyl group, and a 4-guanidinophenyl group, and more preferable are a phenyl group and a 2-methylphenyl group because guanidine compounds with such groups are easily available, and give good curability and adhesiveness to the curable composition to be provided.

As mentioned above, one aryl group is preferably introduced in the guanidine compound (B). As the number of introduced aryl groups increases, however, the curability of the curable composition to be provided is likely to be deteriorated. Thus, the number of introduced aryl groups is preferably one.

The four R¹s in formula (1) each are a hydrogen atom, a saturated hydrocarbon group, -C(=NR²)-NR²₂, or =C(-NR²₂)₂.

The four R¹s each are preferably a hydrogen atom or a saturated hydrocarbon group, and more preferably a hydrogen atom because such a structure gives good curability to the curable composition. In the case that R¹ is a saturated hydrocarbon group, the saturated hydrocarbon group is not particularly limited. Examples thereof include saturated hydrocarbon groups composed only of a hydrogen atom and a carbon atom; and saturated hydrocarbon groups with at least one hydrogen atom thereof substituted by a functional group having at least one selected from a nitrogen atom, an oxygen atom, and a sulfur atom. When R¹ is a saturated hydrocarbon group, the carbon number thereof is preferably 1 to 20, and more preferably 1 to 10 for easy availability.

One of the four R¹s is preferably -C(=NR²)-NR²₂ or =C(-NR²₂)₂, and more preferably -C(=NR²)-NR²₂, because such groups give good adhesiveness to the curable composition to be provided. R²s are each independently a hydrogen atom or an organic group. R²s each are preferably a hydrogen atom or a hydrocarbon group, and more preferably a hydrogen atom or a saturated hydrocarbon group because guanidine compounds with such groups are easily available.

In the case that R¹ is the -C(=NR²)-NR²₂ or =C(-NR²₂)₂, the guanidine compound of formula (1) is called as a biguanide compound.

Any two or more of the five R¹s in formula (1) preferably bond to each other to form a ring because such a structure gives good curability to the curable composition to be provided.

The guanidine compound (B) has preferably 2 or more carbon atoms, more preferably 6 or more carbon atoms, and particularly preferably 7 or more carbon atoms. If the guanidine compound (B) has as small as less than 2 carbon atoms (has a small molecular weight), the compound is likely to have higher volatility, causing deteriorated working environment. The upper limit of the carbon number in the guanidine compound (B) is not necessarily limited, and is preferably 10,000 or less in general.

The guanidine compound (B) has a molecular weight of preferably 60 or more, more preferably 120 or more, and particularly preferably 130 or more for the aforementioned reasons. The upper limit of the molecular weight is not necessarily limited, and is preferably 100,000 or less in general.

The guanidine compound (B) is not particularly limited. Examples thereof include: guanidine compounds such as 1,1,2-trimethylguanidine, 1,2,3-trimethylguanidine, 1,1,2,2,3-pentamethylguanidine, 2-ethyl-1,1,3,3-tetramethylguanidine, 1-benzylguanidine, 1,3-dibenzylguanidine, 1-benzyl-2,3-dimethylguanidine, 1-phenylguanidine, 1-(o-tolyl)guanidine, 1-(3-methylphenyl)guanidine, 1-(4-methylphenyl)guanidine, 1-(2-chlorophenyl)guanidine, 1-(4-chlorophenyl)guanidine, 1-(2,3-xylyl)guanidine, 1-(2,6-xylyl)guanidine, 1-(1-naphthyl)guanidine, 2-phenyl-1,3-dicyclohexylguanidine, 1-phenyl-1-methylguanidine, 1-(4-chlorophenyl)-3-(1-methylethyl)guanidine, 1-(4-methylphenyl)-3-octylguanidine, 1-(4-methoxyphenyl)guanidine, 1,1'-[4-(dodecyloxy)-m-phenylene]bisguanidine, 1-(4-nitrophenyl)guanidine, 4-guanidinobenzoic acid, 2-(phenylimino)imidazolidine, 2-(5,6,7,8-tetrahydronaphthalen-1-ylamino)-2-imidazoline, N-(2-imidazolin-2-yl)-2,3-xylidine, N-(2-imidazolin-2-yl)-1-naphthalenamine, 1,1'-[methylenebis(p-phenylene)]bisguanidine, 1,5,7-triazabicyclo[4.4.0]-5-decene, 7-methyl-1,5,7-triazabicyclo[4.4.0]-5-decene, 7-n-propyl-1,5,7-triazabicyclo[4.4.0]-5-decene, 7-isopropyl-1,5,7-triazabicyclo[4.4.0]-5-decene, 7-n-butyl-1,5,7-triazabicyclo[4.4.0]-5-decene, 7-n-cyclohexyl-1,5,7-triazabicyclo[4.4.0]-5-decene, and 2,3,5,6-tetrahydro-3-phenyl-1H-imidazo[1,2-a]imidazole; and biguanide compounds such as 1-methylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-(3-methylphenyl)biguanide, 1-(4-methylphenyl)biguanide, 1-(2-chlorophenyl)biguanide, 1-(4-chlorophenyl)biguanide, 1-(2,3-xylyl)biguanide, 1-(2,6-xylyl)biguanide, 1-(1-naphthyl)biguanide, 1,3-diphenylbiguanide, 1,5-diphenylbiguanide, 1-phenyl-1-methylbiguanide, 1-(4-chlorophenyl)-5-(1-methylethyl)biguanide, 1-(4-methylphenyl)-5-octylbiguanude, 1-(4-methoxyphenyl)biguanide, 1-(3,4-dichlorophenyl)-5-(1-methylethyl)biguanide, 1,1'-hexamethylenebis[5-(4-chlorophenyl)biguanide], 2-guanidino-1H-benzoimidazole, 1-(4-nitrophenyl)biguanide, 1-benzylbiguanide, 1-(2-phenylethyl)biguanide, 3-(2-phenylethyl)biguanide, N,N-diamidinoaniline, 1,5-ethylenebiguanide, 1-morpholinobiguanide, 3-morpholinobiguanide, 1-(4-chlorobenzyloxy)biguanide, 1-n-butyl-N2-ethylbiguanide, 1,1'-ethylenebisbiguanide, 1-[3-(diethylamino)propyl]biguanide, 1-[3-(dibutylamino)propyl]biguanide, N',N"-dihexyl-3,12-diimino-2,4,11,13-tetraazatetradecanediamidine, 4-[3-(amidino)guanidino]benzenesulfonic acid, 1,2-diisopropyl-3-[bis(dimethylamino)methylene]guanidine, and 5-[3-(2,4,5-trichlorophenoxy)propoxy]-1-isopropylbiguanide.

These guanidine compounds may be added alone, or may be added in combination to the curable composition.

Preferable among these guanidine compounds are 1-phenylguanidine, 1-(o-tolyl)guanidine, 1-phenylbiguanide, 1-(o-tolyl)biguanide and the like because these compounds are easily available, increase the curability of the organic polymer (A), and give good adhesiveness to the curable composition.

The amount of the guanidine compound (B) is preferably 0.1 to 30 parts by weight, and more preferably 0.1 to 12 parts by weight, per 100 parts by weight of the organic polymer (A). The guanidine compound (B) in an amount of 0.1 to 30 parts by weight may give more excellent curability to the curable composition, and allow the curable composition to cure in an appropriate time period. Thus, the curable composition shows excellent workability.

The curable composition of the present invention comprises the guanidine compound (B) as a curing catalyst, and may further comprise other curing catalysts if necessary as long as they never inhibit the effects of the present invention.

The curing catalysts other than the guanidine compound (B) are not particularly limited. Examples thereof include: carboxylic acid metal salts such as tin carboxylates, lead carboxylates, bismuth carboxylates, potassium carboxylates, calcium carboxylates, barium carboxylates, titanium carboxylates, zirconium carboxylates, hafnium carboxylates, vanadium carboxylates, manganese carboxylates, iron carboxylates, cobalt carboxylates, nickel carboxylates, and cerium carboxylates; titanium compounds such as tetrabutyl titanate, tetrapropyl titanate, titanium tetrakis(acetylacetonate), diisopropoxytitanium bis(acetylacetonate), and diisopropoxytitanium bis(ethylacetoacetate); organotin compounds such as dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate), dibutyltin bis(benzylmaleate), dibutyltin diacetate, dioctyltin bis(ethylmaleate), dioctyltin bis(octylmaleate), dibutyltin dimethoxide, dibutyltin bis(nonylphenoxide), dibutenyltin oxide, dibutyltin oxide, dibutyltin bis(acetylacetonate), dibutyltin bis(ethylacetoacetonate), a reaction product of dibutyltin oxide and a silicate compound, and a reaction product of dibutyltin oxide and a phthalate ester; aluminum compounds such as aluminum tris(acetylacetonate), aluminum tris(ethylacetoacetate), and diisopropoxyaluminum ethylacetoacetate; zirconium compounds such as zirconium tetrakis(acetylacetonate); metal alkoxides such as tetrabutoxyhafnium; organic acidic phosphate esters; organic sulfonic acids such as trifluoromethanesulfonic acid; and inorganic acids such as hydrochloric acid, phosphoric acid, and boronic acid.

These curing catalysts are used with the guanidine compound (B) in expectation of an increase in the catalytic activity and improvement in properties such as the depth curability and thin-layer curability of the curable composition and the adhesiveness of the cured product to be provided therefrom.

In the case that an organotin compound is used together, the toxicity of the curable composition is likely to increase as the amount of organotin is increased. Thus, the amount of an organotin compound is preferably small. More specifically, the amount of an organotin compound, calculated as a metal tin, is preferably 5 parts by weight or less, more preferably 0.5 parts by weight or less, and further preferably 0.05 parts by weight or less, per 100 parts by weight of the organic polymer (A). Most preferably, the curable composition is substantially free from an organotin compound.

For the aforementioned reasons, the curable composition of the present invention is preferably a non-organotin curable composition. The non-organotin curable composition herein is defined as one containing 50% by weight or less of an organotin compound relative to the total amount of compounds serving as silanol condensation catalysts. The non-organotin curable composition contains an organotin compound in an amount of preferably 30% by weight or less, more preferably 10% by weight or less, and further preferably 1% by weight or less. Most preferably, the non-organotin curable composition is free from an organotin compound.

In the case that a metal compound other than the organotin is used together, the amount thereof is preferably small in consideration of environmental load. More specifically, it is preferably 5 parts by weight or less, and more preferably 2 parts by weight or less, per 100 parts by weight of the organic polymer (A). Particularly preferably, the curable composition is free from a metal compound.

The curable composition of the present invention is preferably a non-organotin curable composition. In consideration of toxicity or environmental load, the curable composition of the present invention is more preferably a non-tin curable composition which is substantially free from tin compounds such as organotin compounds and tin carboxylates; further preferably a non-organotin and non-metal carboxylate curable composition which is substantially free from organotin compounds and metal carboxylates; and particularly preferably a non-metal catalyst curable composition which is substantially free from the metal element-containing curing catalysts such as metal carboxylates, titanium compounds, organotin compounds, organoaluminum compounds, and zirconium compounds.

The curable composition of the present invention may contain a carboxylic acid as a promoter if necessary to the extent that the acid does not deteriorate the effects of the present invention.

The carboxylic acid used as the promoter is not particularly limited. Examples thereof include: straight-chain saturated fatty acids such as acetic acid, propionic acid, butyric acid, valeric acid, caproic acid, enanthic acid, caprylic acid, 2-ethylhexanoic acid, pelargonic acid, capric'acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid, melissic acid, and lacceric acid; monoenoic unsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepic acid, vaccenic acid, gadoleic acid, gondoic acid, cetoleic acid, erucic acid, brassidic acid, selacholeic acid, ximenic acid, lumequeic acid, acrylic acid, methacrylic acid, angelic acid, crotonic acid, isocrotonic acid, and 10-undecenoic acid; polyenoic unsaturated fatty acids such as linoelaidic acid, linolic acid, 10,12-octadecadienoic acid, hiragonic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid, and docosahexaenoic acid; branched fatty acids such as 1-methylbutyric acid, isobutyric acid, 2-ethylbutyric acid, isovaleric acid, tuberculostearic acid, pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyloctanoic acid, 2-ethyl-2,5-dimethylhexanoic acid, neodecanoic acid, and versatic acid; triple bond-containing fatty acids such as propiolic acid, tariric acid, stearolic acid, crepenynic acid, xymenynic acid, and 7-hexadecynoic acid; alicyclic carboxylic acids such as naphthenic acid, malvalic acid, sterculic acid, hydnocarpic acid, chaulmoogric acid, gorlic acid, 1-methylcyclopentanecarboxylic acid, 1-methylcyclohexanecarboxylic acid, 2-methylbicyclo[2.2.1]-5-heptene-2-carboxylic acid, 1-adamantanecarboxylic acid, bicyclo[2.2.1]heptane-1-carboxylic acid, and bicyclo[2.2.2]octane-1-carboxylic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2,2-dimethyl-3-hydroxypropionic acid, 2-hydroxyhexadecanoic acid, jalapinolic acid, juniperic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, ricinolic acid, camlolenic acid, licanic acid, pheronic acid, cerebronic acid, and 2-methyl-7-oxabicyclo[2.2.1]-5-heptene-2-carboxylic acid; and halogen-substituted products of monocarboxylic acids such as chloroacetic acid, 2-chloroacrylic acid, and chlorobenzoic acid.

Examples of an aliphatic dicarboxylic acid include: saturated dicarboxylic acids such as adipic acid, azelaic acid, pimelic acid, suberic acid, sebacic acid, ethylmalonic acid, glutaric acid, oxalic acid, malonic acid, succinic acid, oxydiacetic acid, dimethylmalonic acid, ethylmethylmalonic acid, diethylmalonic acid, 2,2-dimethylsuccinic acid, 2,2-diethylsuccinic acid, 2,2-dimethylglutaric acid, and 1,2,2-trimethyl-1,3-cyclopentanedicarboxylic acid; and unsaturated dicarboxylic acids such as maleic acid, fumaric acid, acetylenedicarboxylic acid, and itaconic acid.

Examples of an aliphatic polycarboxylic acid include tricarboxylic acids such as aconitic acid, 4,4-dimethylaconitic acid, citric acid, isocitric acid, and 3-methylisocitric acid. Examples of an aromatic carboxylic acid include: aromatic monocarboxylic acids such as benzoic acid, 9-anthracenecarboxylic acid, atrolactic acid, anisic acid, isopropylbenzoic acid, salicylic acid, and toluic acid; and aromatic polycarboxylic acids such as phthalic acid, isophthalic acid, terephthalic acid, carboxyphenylacetic acid, and pyromellitic acid. Such a promoter is used together in expectation of an increase in the catalytic activity of the curing agent and improvement in properties such as curability and depth curability of the curable composition.

The amount of the carboxylic acid is preferably 0.01 to 20 parts by weight, and more preferably 0.1 to 10 parts by weight, per 100 parts by weight of the polymer (A).

The curable composition of the present invention essentially comprises a methyl ester compound (C) together with the guanidine compound (B) in order to maintain good curability after storage.

The methyl ester group-containing compound of the present invention is preferably a methyl ester compound having a molecular weight of 100 to 500, and more preferably 150 to 300, and it is further preferably one in which the α position of the methyl ester group is occupied by a primary carbon atom or a secondary carbon atom, because such compounds greatly inhibit curing retardation.

The methyl ester group-containing compound of the present invention preferably one in which the α position of the methyl ester group is occupied by a primary carbon atom or a secondary carbon atom, because these compounds greatly inhibit curing retardation.

The methyl ester compound (C) is at least one selected from the group consisting of**:** dimethyl malonate, dimethyl succinate, dimethyl glutarate, dimethyl adipate, dimethyl sebacate, methyl acetate, methyl propionate, methyl butyrate, methyl valerate, methyl caprylate, methyl caprate, methyl laurate, methyl myristate, methyl palmitate, methyl stearate, methyl oleate, methyl ricinoleate, and methyl cocoate.

These methyl ester compounds may be added alone or may be added in combination to the curable composition.

The methyl ester group-containing compound preferably has a boiling point of 150°C or higher, and more preferably 200°C or higher, in order to prevent emission of volatile components into the air when the curable composition is used indoors. Preferable among the above methyl ester group-containing compounds are carboxylic acid dimethyl esters and methyl esters of higher fatty acids due to their high boiling points, and more preferable are carboxylic acid dimethyl esters.

Preferable among the methyl ester compounds are dimethyl malonate, dimethyl adipate, methyl acetate, and methyl laurate due to their easy availability, and more preferable is dimethyl adipate.

The amount of the methyl ester compound (C) is not particularly limited. In order to maintain good curability after storage, the curable composition preferably contains a large amount of the methyl ester compound (C). Too large an amount of the methyl ester compound (C), however, may disrupt the balance between the viscosity of the composition and the physical properties of the cured product thereof. Thus, the curable composition should contain the methyl ester compound (C) in an amount appropriate for the purpose. The amount is preferably 0.1 to 30 parts by weight, and more preferably 1 to 15 parts by weight, per 100 parts by weight of the organic polymer (A).

The curable composition of the present invention may contain a plasticizer if necessary.

The plasticizer is not particularly limited. Examples thereof include: phthalate esters such as dibutyl phthalate, diheptyl phthalate, bis(2-ethylhexyl) phthalate, diisodecyl phthalate, diisononyl phthalate, and butyl benzyl phthalate; non-aromatic dibasic acid esters such as dioctyl adipate, dioctyl sebacate, dibutyl sebacate, and isodecyl succinate; aliphatic esters such as butyl oleate and methyl acetylricinoleate; phosphate esters such as tricresyl phosphate and tributyl phosphate; trimellitate esters; sulfonic acid esters such as phenyl pentadecanesulfonate and phenyl hexadecanesulfonate; chlorinated paraffins; hydrocarbon oils such as alkyldiphenyls and partially hydrogenated terphenyls; process oils; and epoxy plasticizers such as epoxidized soybean oil and benzyl epoxystearate.

In the case that a phthalate ester plasticizer is used as the component (D) among the plasticizers, the curable composition is allowed to have excellent curability. Preferable among the phthalate ester plasticizers (D) are bis(2-ethylhexyl)phthalate and diisodecyl phthalate due to their easy availability.

Examples of a polymer plasticizer include: vinyl polymers obtained by polymerization of vinyl monomers through various methods; esters of polyalkylene glycols; polyester plasticizers; polyether polyols having a molecular weight of 500 or more, and further 1000 or more, such as polypropylene glycol; polystyrenes; polybutadiene, and polybutene.

The polymer plasticizer preferably has a number average molecular weight of 500 to 15000.

The polymer plasticizer is preferably a reactive silyl group-containing polymer plasticizer because, in the case that such a polymer plasticizer is used, the polymer plasticizer is involved in the curing reaction and is prevented from transferring from the cured product to be provided.

These plasticizers may be added alone, or may be added in combination.

In the case that the curable composition contains the phthalate ester plasticizer (D) among the plasticizers, the curable composition to be provided is allowed to have excellent curability. Thus, the proportion of the phthalate ester plasticizer (D) in the plasticizer component is preferably large. The phthalate ester plasticizer (D) preferably occupies 50% by weight or more, more preferably 70% by weight or more, and particularly preferably 100% by weight, of the plasticizer component.

In the case that the curable composition contains the plasticizer, the amount thereof is preferably 5 to 150 parts by weight, more preferably 10 to 120 parts by weight, and particularly preferably 20 to 100 parts by weight, per 100 parts by weight of the organic polymer (A). The plasticizer in an amount of less than 5 parts by weight is unlikely to show its effects as a plasticizer, and that in an amount of more than 150 parts by weight is likely to cause the cured product to have poor mechanical strength.

The curable composition of the present invention may contain a silane coupling agent if necessary.

The silane coupling agent is not particularly limited. Examples thereof include: amino silanes such as γ-aminopropyltrimethoxysilane, γ-aminopropyltriethoxysilane, γ-aminopropyltriisopropoxysilane, γ-aminopropylmethyldimethoxysilane, γ-(2-aminoethyl)aminopropylmethyldimethoxysilane, γ-(2-aminoethyl)aminopropyltriethoxysilane, γ-(2-(2-aminoethyl)aminoethyl)aminopropyltrimethoxysilane, 3-(N-ethylamino)-2-methylpropyltrimethoxysilane, N-cyclohexylaminomethyltriethoxysilane, and N-phenylaminomethyltrimethoxysilane; ketimine silanes such as N-(1,3-dimethylbutylidene)-3-(triethoxysilyl)-1-propaneamine; isocyanato silanes such as γ-isocyanatopropyltrimethoxysilane and γ-isocyanatopropyltriethoxysilane; mercapto silanes such as γ-mercaptopropyltrimethoxysilane; epoxy silanes such as γ-glycidoxypropyltrimethoxysilane; carboxy silanes such as β-carboxyethyltriethoxysilane; vinyl unsaturated group-containing silanes such as vinyltrimethoxysilane, vinyltriethoxysilane, and γ-methacryloyloxypropylmethyldimethoxysilane; halogen-containing silanes such as γ-chloropropyltrimethaxysilane; and isocyanurate silanes such as tris(3-trimethoxysilylpropyl)isocyanurate. In addition, reaction products of the amino silanes and the epoxy silanes and reaction products of the amino silanes and the isocyanurate silanes are also usable.

In the case that the curable composition contains the silane coupling agent, the amount thereof is preferably 0.01 to 20 parts by weight per 100 parts by weight of the organic polymer (A).

In order to obtain an adhesiveness-imparting effect, the curable composition of the present invention may contain substances such as epoxy resin, phenol resin, sulfur, alkyl titanates, and aromatic polyisocyanates if necessary. In the case that the curable composition contains these resins, the amount thereof is preferably 5 parts by weight or less per 100 parts by weight of the organic polymer (A).

The curable composition of the present invention may contain a filler if necessary. The filler is not particularly limited. Examples thereof include: reinforcing fillers such as fumed silica, precipitated silica, crystalline silica, fused silica, dolomite, silicic anhydride, hydrous silicic acid, and carbon black; organic powders such as heavy calcium carbonate, colloidal calcium carbonate, magnesium carbonate, diatomite, calcined clay, clay, talc, titanium oxide, bentonite, organic bentonite, ferric oxide, fine aluminum powder, flint powder, zinc oxide, activated zinc white, shirasu balloons, glass microballoons, organic microballoons of phenol resin and vinylidene chloride resin, PVC powder, and PMMA powder; and fibrous fillers such as asbestos, fibrous glass, and filaments.

In the case that the curable composition contains the filler, the amount thereof is preferably 1 to 250 parts by weight, and more preferably 10 to 200 parts by weight, per 100 parts by weight of the organic polymer (A).

In order to achieve a luxurious appearance, the curable composition of the present invention may contain a scaly or granular substance. The scaly or granular substance is not particularly limited. Examples thereof include ones disclosed in JP-A H09-53063. The diameter of the substance is appropriately selected depending on materials and designs of walls, and is preferably 0.1 mm or greater.

The amount of the scaly or granular substance is preferably 1 to 200 parts by weight per 100 parts by weight of the curable composition.

The material of the scaly or granular substance is not particularly limited. Examples thereof include inorganic materials such as natural materials e.g. silica sand and mica, synthetic rubber, synthetic resin, and alumina.

For the same purpose, the curable composition may contain balloons (preferably having an average particle size of 0.1 mm or greater).

Also in the case that the curable composition of the present invention contains cured sealant particles, the cured product to be provided is allowed to have improved appearance with a rough surface in terms of design. JP-A 2001-115142 discloses preferable conditions such as diameter, amount, and material of the cured sealant particles.

The curable composition of the present invention may contain a silicate if necessary. The silicate is not particularly limited. Examples thereof include tetraalkoxysilanes and partially hydrolyzed condensation products derived therefrom. Specific examples thereof include tetraalkoxysilanes (tetraalkyl silicates) such as tetramethoxysilane, tetraethoxysilane, and ethoxytrimethoxysilane, and partially hydrolyzed condensation products derived therefrom.

In the case that the curable composition contains the silicate, the amount thereof is preferably 0.1 to 20 parts by weight per 100 parts by weight of the organic polymer (A).

The curable composition of the present invention may contain a tackifier if necessary. The tackifier resin is not particularly limited as long as it is commonly used at normal temperature, irrespective of whether it is in a solid or liquid state. Examples thereof include: styrene block copolymers, hydrogenated products thereof, phenol resins, modified phenol resins (such as cashew oil-modified phenol resins and tall oil-modified phenol resins), terpene phenol resins, xylene-phenol resins, cyclopentadiene-phenol resins, coumarone indene resins, rosin resins, rosin ester resins, hydrogenated rosin ester resins, xylene resins, low-molecular-weight polystyrene resins, styrene copolymer resins, petroleum resins (such as C5 hydrocarbon resins, C9 hydrocarbon resins, and C5C9 hydrocarbon copolymer resins), hydrogenated petroleum resins, terpene resins, DCPD resins, and petroleum resins. In the case that the curable composition contains the tackifier, the amount thereof is preferably 5 to 1,000 parts by weight per 100 parts by weight of the organic polymer (A).

The curable composition of the present invention may contain a solvent or a diluent if necessary. The solvent and diluent are not particularly limited. Examples thereof include aliphatic hydrocarbons, aromatic hydrocarbons, alicyclic hydrocarbons, halogenated hydrocarbons, alcohols, esters, ketones, and ethers. These may be used alone, or may be used in combination.

The curable composition of the present invention may contain a physical-property modifier if necessary. The physical-property modifier is not particularly limited. Examples thereof include: alkylalkoxysilanes such as methyltrimethoxysilane and dimethyldimethoxysilane; alkylisopropenoxysilanes such as dimethyldiisopropenoxysilane; functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; silicone varnishes; and polysiloxanes.

Preferable among these physical-property modifiers are ones that generate a compound containing a monovalent silanol group in each molecule by hydrolysis because such modifiers reduce the modulus of the cured product to be provided without deteriorating the surface stickiness thereof.

The compound that generates a compound containing a monovalent silanol group in each molecule by hydrolysis is not particularly limited. Examples thereof include: the compounds disclosed in JP-A H05-117521; compounds derived from alkyl alcohols which generate by hydrolysis an organosilicon compound represented by R₃SiOH such as trimethylsilanol; and the compounds disclosed in JP-A H11-241029 which are derived from polyhydric alcohols having 3 or more hydroxy groups in each molecule and generate by hydrolysis an organosilicon compound represented by R₃SiOH such as trimethylsilanol.

Examples thereof further include: the compounds disclosed in JP-A H07-258534 which are derived from oxypropylene polymers and generate by hydrolysis an organosilicon compound represented by R₃SiOH such as trimethylsilanol; and the compounds disclosed in JP-A H06-279693 which contain a cross-linkable, hydrolyzable silyl group and a silyl group capable of generating a monovalent silanol group-containing compound by hydrolysis.

In the case that the curable composition contains the physical-property modifier, the amount thereof is preferably 0.1 to 20 parts by weight per 100 parts by weight of the organic polymer (A).

The curable composition of the present invention may contain a thixotropic agent (anti-sagging agent) if necessary. The thixotropic agent is not particularly limited. Examples thereof include polyamide waxes; hydrogenated castor oil derivatives; and metal soaps such as calcium stearate, aluminum stearate, and barium stearate. Examples thereof further include: powdery rubber having a particle size of 10 to 500 µm such as ones disclosed in JP-A H11-349916; and organic fibers such as ones disclosed in JP-A 2003-155389. These thixotropic agents (anti-sagging agents) may be used alone or may be used in combination.

In the case that the curable composition contains the thixotropic agent, the amount thereof is preferably 0.1 to 20 parts by weight per 100 parts by weight of the organic polymer (A).

The curable composition of the present invention may contain a compound having an epoxy group in each molecule if necessary. Such an epoxy group-containing compound enhances restorability of the cured product to be provided.

The epoxy group-containing compound is not particularly limited. Examples thereof include: epoxidized unsaturated fats and oils, epoxidized unsaturated fatty acid esters, alicyclic epoxy compounds, compounds such as epichlorohydrin derivatives, and mixtures thereof.

In the case that the curable composition contains the epoxy compound, the amount thereof is preferably 50 parts by weight or less per 100 parts by weight of the organic polymer (A).

The curable composition of the present invention may contain a photocurable substance if necessary. The photocurable substance is not particularly limited. Examples thereof include conventionally known ones such as organic monomers, oligomers, resins, and compositions containing these substances. Specific examples thereof include unsaturated acrylic compounds, polyvinyl cinnamates, and azidized resins.

In the case that the curable composition contains the photocurable substance, the amount thereof is preferably 0.1 to 20 parts by weight per 100 parts by weight of the organic polymer (A).

The curable composition of the present invention may contain an oxygen-curable substance if necessary. The oxygen-curable substance is not particularly limited as long as it contains an unsaturated compound capable of reacting with oxygen in the air. Examples thereof include: drying oils such as tung oil and linseed oil, and various alkyd resins obtained by modification of such compounds; drying oil-modified acrylic polymers, epoxy resins, and silicone resins; liquid polymers such as 1,2-polybutadiene, 1,4-polybutadiene, and C5-C8 diene polymers; and liquid copolymers such as NBR and SBR, which are obtained by copolymerization of such a diene compound with a vinyl compound (e.g. acrylonitrile and styrene) that is copolymerizable with the diene compound such that the diene compound serves as the main component.

In the case that the curable composition contains the oxygen-curable substance, the amount thereof is preferably 0.1 to 20 parts by weight per 100 parts by weight of the organic polymer (A).

The curable composition of the present invention may contain an antioxidant if necessary. The antioxidant is not particularly limited. Examples thereof include hindered phenol antioxidants, monophenol antioxidants, bisphenol antioxidants, and polyphenol antioxidants. Preferable among these are hindered phenol antioxidants. Also preferable are hindered amine light stabilizers such as TINUVIN 622LD (Ciba Specialty Chemicals Inc.) and SANOL LS-770 (Sankyo Lifetech Co., Ltd.). JP-A H04-283259 and H09-194731 also disclose specific examples of the antioxidant.

In the case that the curable composition contains the antioxidant, the amount thereof is preferably 0.1 to 10 parts by weight per 100 parts by weight of the organic polymer (A).

The curable composition of the present invention may contain a light stabilizer if necessary. The light stabilizer is not particularly limited. Examples thereof include benzotriazole compounds, hindered amine compounds, and benzoate compounds. Preferable among these are hindered amine light stabilizers.

In the case that the curable composition contains the light stabilizer, the amount thereof is preferably 0.1 to 10 parts by weight per 100 parts by weight of the organic polymer (A). JP-A H09-194731 also discloses specific examples of the light stabilizer.

The curable composition of the present invention may contain an ultraviolet absorber if necessary. The ultraviolet absorber is not particularly limited. Examples thereof include benzophenone compounds, benzotriazole compounds, salicylate compounds, substituted tolyl compounds, and metal chelate compounds. In the case that the curable composition contains the ultraviolet absorber, the amount thereof is preferably 0.1 to 10 parts by weight per 100 parts by weight of the organic polymer (A).

The curable composition of the present invention may contain an epoxy resin if necessary. The epoxy resin improves adhesiveness of the cured product to be provided, and the curable composition containing the epoxy resin can be suitably used as adhesives, especially adhesives for exterior wall tiles.

The epoxy resin is not particularly limited. Examples thereof include: epichlorohydrin-bisphenol A epoxy resin, epichlorohydrin-bisphenol F epoxy resin, novolac epoxy resin, hydrogenated bisphenol A epoxy resin, alicyclic epoxy resins, N,N-diglycidylaniline, N,N-diglycidyl-o-toluidine, triglycidyl isocyanurate, polyalkylene glycol diglycidyl ethers, glycidyl ethers of polyalcohols such as glycerin, hydantoin epoxy resin, and epoxidized products of unsaturated polymers such as petroleum resin.

In the case that the curable composition contains the epoxy resin, the amount thereof varies depending on the application of the curable composition, etc. For example, in order to improve the properties such as impact resistance, flexibility, toughness, and peeling strength of a cured product of the epoxy resin, the amount of the organic polymer (A) is preferably 1 to 100 parts by weight per 100 parts by weight of the epoxy resin. In order to improve the strength of a cured product of the organic polymer (A), the amount of the epoxy resin is preferably 1 to 200 parts by weight per 100 parts by weight of the organic polymer (A). Here, the amount of the epoxy resin is preferably small because the epoxy resin is more likely to suppress the catalytic activity of the guanidine compound (B) as the amount thereof increases. The amount of the epoxy resin is preferably 50 parts by weight or lees, and more preferably 5 parts by weight or less, per 100 parts by weight of the organic polymer (A). Particularly preferably, the curable composition is substantially free from the epoxy resin.

In the case that the curable composition of the present invention contains the epoxy resin, the curable composition preferably further contains a curing agent for the epoxy resin.

The curing agent for the epoxy resin is not particularly limited as long as it is a compound that functions to cure the epoxy resin. Examples thereof include: primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, and amine-terminated polyether; tertiary amines such as 2,4,6-tris(dimethylaminomethyl)phenol and tripropylamine, and salts of these tertiary amines; polyamide resins; imidazoles; dicyandiamides; boron trifluoride complex compounds; carboxylic anhydrides such as phthalic anhydride, hexahydrophthalic anhydride, tetrahydrophthalic anhydride, dodecenyl succinic anhydride, pyromellitic anhydride, and chlorendic anhydride; alcohols; phenols; carboxylic acids; and diketone complex compounds of aluminum or zirconium.

Preferable among the curing agents for the epoxy resin are ketimine compounds because they provide one-pack type curable compositions. The ketimine compound is stable in the absence of moisture and on the other hand, is decomposed into a primary amine and a ketone by moisture; the generated primary amine serves as a curing agent for curing the epoxy resin at room temperature. Examples of the ketimine compound include compounds obtained by the condensation reaction between an amine compound and a carbonyl compound.

The curable composition of the present invention may contain various additives other than the aforementioned additives if necessary in order to adjust physical properties of the curable composition or the cured product to be provided therefrom. Examples of the additives include: curability modifiers, radical inhibitors, metal deactivators, antiozonants, phosphorus type peroxide decomposers, lubricants, pigments, blowing agents, antitermites, and antifungal agents. JP-B H04-69659 and H07-108928, and JP-A S63-254149, S64-22904, and 2001-72854 and other documents disclose specific examples thereof. These additives may be used alone or may be used in combination.

In the case of a one-pack type curable composition, all of the ingredients are blended in advance and the curable composition may cure during storage if moisture is present in the ingredients. Thus, a formulation ingredient that contains moisture is preferably dehydrated and dried prior to the blending, or is preferably dehydrated by pressure reduction upon the blending and kneading.

In the case of a two-pack type curable composition, a curing catalyst is not required to be blended in the base mixture including the reactive silyl group-containing organic polymer. Thus, the composition is less likely to cure (gelate) even though some moisture exists in the formulation ingredients; if long-term storage stability is required, however, the formulation ingredients are preferably dehydrated and dried.

Preferable examples of the dehydrating or drying method include: heat drying and vacuum dehydration in the case that the formulation ingredients are solids such as powder; and vacuum dehydration, and dehydration with substances such as synthetic zeolite, activated alumina, silica gel, quick lime, and magnesium oxide in the case that the formulation ingredients are liquids. Preferable examples thereof further include a dehydration method in which an alkoxysilane compound, such as n-propyltrimethoxysilane, vinyltrimethoxysilane, vinylmethyldimethoxysilane, methyl silicate, ethyl silicate, γ-mercpatopropylmethyldimethoxysilane, γ-mercaptopropylmethyldiethoxysilane, and γ-glycidoxypropyltrimethoxysilane, an oxazolidine compound, such as 3-ethyl-2-methyl-2-(3-methylbutyl)-1,3-oxazolidine, or an isocyanate compound is added to the curable composition, and the compound is allowed to react with moisture in the formulation ingredients. As mentioned here, an alkoxysilane compound, oxazolidine compound, and isocyanate compound improve the storage stability of the curable composition.

The amount of the alkoxysilane compound reactive with moisture, such as vinyltrimethoxysilane, added for the purpose of drying is preferably 0.1 to 20 parts by weight per 100 parts by weight of the organic polymer (A).

The curable composition of the present invention may be prepared by any method. Examples of the preparation method include conventionally known methods such as a method in which the aforementioned ingredients are mixed and kneaded at normal temperature or under heating with a mixer, roller, kneader or the like; and a method in which the ingredients are dissolved in a small amount of an appropriate solvent and then mixed.

When exposed to the air, the curable composition of the present invention forms a three-dimensional network structure under the action of atmospheric moisture, and thus the composition cures into a solid having rubber elasticity.

### EXAMPLES

The following will specifically describe the present invention referring to, but not limited to, the examples and comparative examples.

### (Synthesis Example 1)

Polyoxypropylene diol having a molecular weight of about 2,000 and polyoxypropylene triol having a molecular weight of about 3,000 were mixed to provide a 1/1 (in weight ratio) mixture as an initiator. Propylene oxide was polymerized in the presence of the initiator and a zinc hexacyanocobaltate glyme complex catalyst to provide polypropylene oxide having a number average molecular weight of about 19,000 (polystyrene-equivalent molecular weight determined with a TOSOH model HLC-8120 GPC solvent delivery system, a TOSOH model TSK-GEL H type column, and THF as a solvent). Then, a solution of NaOMe in methanol was added in an amount of 1.2 equivalents to the amount of the hydroxy groups of the obtained hydroxy-terminated polypropylene oxide, and the methanol was distilled off. In addition, allyl chloride was added, and thereby each terminal hydroxy group was converted to an allyl group.

As a result, an allyl-terminated polypropylene oxide having a number average molecular weight of about 19,000 was obtained. Next, n-hexane (300 parts by weight) and water (300 parts by weight) were added to the unpurified allyl-terminated polypropylene oxide (100 parts by weight) and then the mixture was stirred. The resultant mixture was centrifuged so that the water was removed. Water (300 parts by weight) was further added to the obtained hexane solution and the mixture was stirred. The mixture was then centrifuged again so that the water was removed, and the hexane was devolatilized under reduced pressure. Thereby, purified allyl-terminated polypropylene oxide was obtained.

The obtained allyl-terminated polypropylene oxide (100 parts by weight) was mixed with a solution of a platinum-vinylsiloxane complex in isopropanol (150 ppm, platinum content: 3 wt%) as a catalyst, and was reacted with methyldimethoxysilane (1.35 parts by weight) for 5 hours at 90°C. Thus, a methyldimethoxysilyl-terminated polyoxypropylene polymer (A-1) was prepared.

As a result of ¹H-NMR measurement (in a CDCl₃ solvent, with a JEOL Ltd. model JNM-LA 400), the average number of terminal methyldimethoxysilyl groups per molecule was found to be about 1.7.

### (Synthesis Example 2)

Propylene oxide was polymerized in the presence of polyoxypropylene triol having a molecular weight of about 3,000 as an initiator and a zinc hexacyanocobaltate glyme complex catalyst to provide polypropylene oxide having a number average molecular weight of about 26,000 (polystyrene-equivalent molecular weight determined by the same method as in Synthesis Example 1). Next, a solution of NaOMe in methanol was added in an amount of 1.2 equivalents to the amount of the hydroxy groups of the obtained hydroxy-terminated polypropylene oxide, and the methanol was distilled off. Then, allyl chloride was added, and thereby each terminal hydroxy group was converted to an allyl group. Unreacted allyl chloride was devolatilized under reduced pressure.

Next, n-hexane (300 parts by weight) and water (300 parts by weight) were added to the obtained unpurified allyl-terminated polypropylene oxide (100 parts by weight) and then the mixture was stirred. The resultant mixture was centrifuged so that the water was removed. Water (300 parts by weight) was further added to the obtained hexane solution and the mixture was stirred. The mixture was then centrifuged again so that the water was removed, and the hexane was devolatilized under reduced pressure. Thereby, allyl-terminated trifunctional polypropylene oxide having a number average molecular weight of about 26,000 was obtained.

The obtained allyl-terminated trifunctional polypropylene oxide (100 parts by weight) and hexane (2 parts by weight) were charged into a 1-L autoclave, and were azeotropically dehydrated at 90°C. Then, the hexane was removed under reduced pressure, and the atmosphere was replaced by nitrogen. The obtained product was mixed with a solution of a platinum-divinyldisiloxane complex in isopropanol (150 ppm, platinum content: 3 wt%) as a catalyst, and was reacted with trimethoxysilane (1.28 parts by weight) for 5 hours at 90°C. Thus, a trimethoxysilyl-terminated polyoxypropylene polymer (A-2) was prepared. As a result of ¹H-NMR measurement (by the same method as in Synthesis Example 1), the average number of terminal trimethoxysilyl groups per molecule was found to be 1.8.

### (Synthesis Example 3)

Propylene oxide was polymerized in the presence of polyoxypropylene diol having a molecular weight of about 2,000 as an initiator and a zinc hexacyanocobaltate glyme complex catalyst to provide polypropylene oxide having a number average molecular weight of about 25,500 (polystyrene-equivalent molecular weight determined by the same method as in Synthesis Example 1). Next, a solution of NaOMe in methanol was added in an amount of 1.2 equivalents to the amount of the hydroxy groups of the obtained hydroxy-terminated polypropylene oxide, and the methanol was distilled off. Then, allyl chloride was added, and thereby each terminal hydroxy group was converted to an allyl group. Unreacted allyl chloride was devolatilized under reduced pressure.

Next, n-hexane (300 parts by weight) and water (300 parts by weight) were added to the obtained unpurified allyl-terminated polypropylene oxide (100 parts by weight) and then the mixture was stirred. The resultant mixture was centrifuged so that the water was removed. Water (300 parts by weight) was further added to the hexane solution and the mixture was stirred. The mixture was then centrifuged again so that the water was removed, and then the hexane was devolatilized under reduced pressure. Thereby, allyl-terminated bifunctional polypropylene oxide having a number average molecular weight of about 25,500 was obtained.

The obtained allyl-terminated polypropylene oxide (100 parts by weight) was reacted with trimethoxysilane (1.1 parts by weight) for 5 hours at 90°C in the presence of a solution of a platinum-vinylsiloxane complex in isopropanol (150 ppm, platinum content: 3 wt%) as a catalyst. Thus, a trimethoxysilyl-terminated polyoxypropylene polymer (A-3) was prepared. As a result of ¹H-NMR measurement (by the same method as in Synthesis Example 1), the average number of terminal trimethoxysilyl groups per molecule was found to be 1.3.

### (Synthesis Example 4)

Propylene oxide was polymerized in the presence of polypropylene glycol as an initiator and a zinc hexacyanocobaltate glyme complex catalyst to provide polypropylene oxide having a number average molecular weight of about 28,500 (polystyrene-equivalent molecular weight determined by the same method as in Synthesis Example 1). Next, a solution of NaOMe in methanol was added in an amount of 1.2 equivalents to the amount of the hydroxy groups of the obtained hydroxy-terminated polypropylene oxide, and the methanol was distilled off. Then, allyl chloride was added, and thereby each terminal hydroxy group was converted to an allyl group. Unreacted allyl chloride was devolatilized under reduced pressure.

Next, n-hexane (300 parts by weight) and water (300 parts by weight) were added to the obtained unpurified allyl-terminated polypropylene oxide (100 parts by weight) and then the mixture was stirred. The resultant mixture was centrifuged so that the water was removed. Water (300 parts by weight) was further added to the hexane solution and the mixture was stirred. The mixture was then centrifuged again so that the water was removed, and the hexane was devolatilized under reduced pressure. Thereby, allyl-terminated bifunctional polypropylene oxide having a number average molecular weight of about 28,500 was obtained.

The obtained allyl-terminated polypropylene oxide (100 parts by weight) was reacted with triethoxysilane (1.48 parts by weight) for 2 hours at 90°C in the presence of a solution of a platinum-vinylsiloxane complex in isopropanol (150 ppm, platinum content: 3 wt%) as a catalyst. Thereby, a triethoxysilyl-terminated polypropylene oxide was obtained. As a result of ¹H-NMR measurement (by the same method as in Synthesis Example 1), the average number of terminal triethoxysilyl groups per molecule was found to be 1.6.

The obtained triethoxysilyl-terminated polypropylene oxide (100 parts by weight) was mixed with a solution of 0.5-wt% hydrochloric acid in methanol (0.24 wt%) as a catalyst, and methanol (20 parts by weight) was added thereto. The mixture was stirred for 2 hours at 70°C, and thus the terminal triethoxysilyl groups were converted to trimethoxysilyl groups. Then, the methanol was volatilized under reduced pressure. Thus, a trimethoxysilyl-terminated polyoxypropylene polymer (A-4) was prepared. As a result of ¹H-NMR measurement by the same method as mentioned above, the average number of terminal trimethoxysilyl groups per molecule was found to be 1.6.

### (Synthesis Example 5)

To the hydroxy-terminated polypropylene oxide having a number average molecular weight of about 28,500 obtained in Synthesis Example 4 was added γ-isocyanatopropyltrimethoxysilane in an amount of 1.05 equivalents to the amount of the hydroxy groups of the hydroxy-terminated polypropylene oxide, and they were allowed to react with each other for 2 hours at 90°C in the presence of a solution of bismuth tris(2-ethylhexanoate) in 2-ethylhexanoic acid (30 ppm) to provide a trimethoxysilyl-terminated polyoxypropylene polymer (A-5). As a result of ¹H-NMR measurement (by the same method as in Synthesis Example 1), the introduction ratio of trimethoxysilyl groups into terminals was determined to be 100%.

### (Preparation of 1-phenylguanidine solution (I))

1-Phenylguanidine (100 parts by weight, Nippon Carbide Industries Co., Inc.) and polyoxypropylene diol with a molecular weight of 3,000 (150 parts by weight, trade name: Actcol P-23, MITSUI TAKEDA CHEMICALS, INC.) were mixed with each other. Then, the mixture was left in an oven at 80°C for an hour to give a yellow, transparent 1-phenylguanidine solution (I).

### (Preparation of 1-phenylguanidine solution (II))

1-Phenylguanidine (100 parts by weight) and N-n-butylbenzenesulfonamide (134 parts by weight, trade name: TOPCIZER No. 7, Fuji Amide Chemical Co., Ltd.) were mixed with each other. Then, the mixture was left in an oven at 80°C for an hour to give a yellow, transparent 1-phenylguanidine solution (II).

### (Example 1)

The methyldimethoxysilyl-terminated polyoxypropylene polymer (A-1) prepared in Synthesis Example 1 (80 parts by weight); the trimethoxysilyl-terminated polyoxypropylene polymer (A-2) prepared in Synthesis Example 2 (20 parts by weight); surface-treated colloidal calcium carbonate (120 parts by weight, trade name: HAKUENKA CCR, Shiraishi Kogyo Kaisha, Ltd.); a phthalate ester plasticizer (50.5 parts by weight, trade name: DIDP, Kyowa Hakko); titanium oxide as a white pigment (20 parts by weight, trade name: TIPAQUE R-820, Ishihara Sangyo Kaisha, Ltd.); an anti-sagging agent (2 parts by weight, trade name: DISPARLON 6500, Kusumoto Chemicals, Ltd.); a benzoate ultraviolet absorber (1 part by weight, trade name: Sumisorb 400, Sumika Chemtex Co., Ltd.); and a hindered amine light stabilizer (1 part by weight, trade name: SANOL LS-770, Sankyo Lifetech Co., Ltd.) were weighed, mixed, and sufficiently kneaded. Then, the mixture was passed through a three-roll paint mill for sufficient dispersion.

Next, the mixture was dehydrated under reduced pressure for 2 hours at 120°C, and then cooled down to 50°C or lower. Thereafter, vinyltrimethoxysilane as a dehydrating agent (2 parts by weight, trade name: A-171, Momentive Performance Materials Inc.); and γ-(2-aminoethyl)aminopropyltrimethoxysilane (1.5 parts by weight, trade name: A-1120, Momentive Performance Materials Inc.) and γ-aminopropyltrimethoxysilane (1.5 parts by weight, trade name: A-1110, Momentive Performance Materials Inc.) as adhesiveness-imparting agents, were added to the mixture and then the mixture was kneaded for 10 minutes. Next, dimethyl adipate (10 parts by weight) and 1-phenylguanidine solution (I) as a curing catalyst (7.5 parts by weight) were added to the mixture and then the mixture was kneaded for 10 minutes. The mixture was kneaded in a state substantially free from moisture, and then hermetically packed in a cartridge that was a moisture-proof container. Thus, a one-component type curable composition was prepared.

### (Example 2)

Except that the organic polymer was changed to the organic polymer (A-2) (100 parts by weight), the amount of DIDP was changed to 45 parts by weight, the amount of A-171 was changed to 3 parts by weight, and the curing catalyst was changed to 1-phenylguanidine solution (II) (4.7 parts by weight), a curable composition was prepared by the same method as in Example 1.

### (Example 3)

Except that the amount of the 1-phenylguanidine solution (II) was changed to 2.3 parts by weight, a curable composition was prepared by the same method as in Example 2.

### (Example 4)

Except that the guanidine compound was changed to 1-(o-tolyl)biguanide (3 parts by weight), a curable composition was prepared by the same method as in Example 2.

### (Example 5)

Except that the organic polymer was changed to the organic polymer (A-3) (100 parts by weight), the amount of DIDP was changed to 55 parts by weight, the adhesiveness-imparting agent was changed to A-1120 (3 parts by weight), and the guanidine compound was changed to 1-(o-tolyl)biguanide (4 parts by weight), a curable composition was prepared by the same method as in Example 1.

### (Example 6)

Except that the organic polymer was changed to the organic polymer (A-4) (100 parts by weight), and the amount of the 1-phenylguanidine solution (II) was changed to 3.5 parts by weight, a curable composition was prepared by the same method as in Example 2.

### (Example 7)

Except that the guanidine compound was changed to 1-(o-tolyl)biguanide (3 parts by weight), a curable composition was prepared by the same method as in Example 6.

### (Example 8)

Except that the organic polymer was changed to the organic polymer (A-5) (100 parts by weight), a curable composition was prepared by the same method as in Example 6.

### (Example 9)

Except that the organic polymer was changed to Desmoseal S XP 2636 (100 parts by weight, Bayer MaterialScience AG), a curable composition was prepared by the same method as in Example 6.

### (Example 10)

Except that the organic polymer was changed to Desmoseal XP 2458 (100 parts by weight, Bayer MaterialScience AG), a curable composition was prepared by the same method as in Example 6.

### (Comparative Example 1)

Except that dimethyl adipate was not added, a curable composition was prepared by the same method as in Example 1.

### (Comparative Example 2)

Except that dimethyl adipate was not added, a curable composition was prepared by the same method as in Example 5.

### (Comparative Example 3)

Except that the phthalate ester plasticizer was changed to a polyether plasticizer and dimethyl adipate was not added, a curable composition was prepared by the same method as in Example 5.

### (Curability (Skinning time period))

The curable composition was spread so as to be about 3 mm in thickness with a spatula under the conditions of 23°C and 50%RH. Then, a microspatula was brought into light contact with the surface of the curable composition from time to time. Thereby, the skinning time period required for the composition to become no more sticking to the microspatula was measured (this indicates the curability before storage). Thereafter, the curable composition was stored for 28 days at 50°C, and left for 1 day in a constant-temperature (23°C) and constant-humidity (50%) condition. Then, the skinning time period was measured by the same method as mentioned above (this indicates the curability after storage). In addition, the change ratio of the curability after storage to the curability before storage was measured. Table 1 shows the results.

**[Table 1]**

| | | Examples | | | | | | | | | | Comparative Examples | | |
|---|---|---|---|---|---|---|---|---|---|---|---|---|---|---|
| | | 1 | 2 | 3 | 4 | 5 | 6 | 7 | 8 | 9 | 10 | 1 | 2 | 3 |
| Organic polymer (A) | A-1 | 80 | | | | | | | | | | 80 | | |
| | A-2 | 20 | 100 | 100 | 100 | | | | | | | 20 | | |
| | A-3 | | | | | 100 | 100 | | | | | | 100 | 100 |
| | A-4 | | | | | | 100 | 100 | | | | | | |
| | A-5 | | | | | | | | 100 | | | | | |
| | Desmoseal SXP 2636 | | | | | | | | | 100 | | | | |
| | Desmoseal XP 2458 | | | | | | | | | | 100 | | | |
| Calcium carbonate | NAKUENKA CCR | 120 | 120 | 120 | 120 | 120 | 120 | 120 | 120 | 120 | 120 | 120 | 120 | 120 |
| Phthalate ester Plasticizer (D) | DIDP | 50.5 | 45 | 45 | 45 | 55 | 45 | 45 | 45 | 45 | 45 | 50.5 | 55 | |
| Polyether plasticizer | Aotcol P-23 | | | | | | | | | | | | | 55 |
| Pigment | TIPAQUE R-820 | 20 | 20 | 20 | 20 | 20 | 20 | 20 | 20 | 20 | 20 | 20 | 20 | 20 |
| Anti-sagging agent | DISPARLON 6500 | 2 | 2 | 2 | 2 | 2 | 2 | 2 | 2 | 2 | 2 | 2 | 2 | 2 |
| Ultraviolet absorber | Sumisorb 400 | 1 | 1 | 1 | 1 | 1 | 1 | 1 | 1 | 1 | 1 | 1 | 1 | 1 |
| Light stabilizer | SANOL LS-770 | 1 | 1 | 1 | 1 | 1 | 1 | 1 | 1 | 1 | 1 | 1 | 1 | 1 |
| Dehydrating agent | A-171 | 2 | 3 | 3 | 3 | 2 | 3 | 3 | 3 | 3 | 3 | 2 | 2 | -2 |
| Adhesiveness-imparting agent | A-1120 | 1.5 | 1.5 | 1.5 | 1.5 | 3 | 1.5 | 1.5 | 1.5 | 1.5 | 1.5 | 1.5 | 3 | 3 |
| | A-1110 | 1.5 | 1.5 | 1.5 | 1.5 | | 1.5 | 1.5 | 1.5 | 1.5 | 1.5 | 1.5 | | |
| Methyl ester group-containing compound (c) | Dimethyladipate | 10 | 10 | 10 | 10 | 10 | 10 | 10 | 10 | 10 | 10 | | | |
| Guanidine compound (B) | 1-Phenylguanidine solution (I) | 7.5 | | | | | | | | | | 7.5 | | |
| | 1-Phenylguanidine solution (II) | | 4.7 | 2.3 | | | 3.5 | | 3.5 | 3.5 | 3.5 | | | |
| | 1-(o-Tolyl)biguanide | | | | 3 | 4 | | 3 | | | | | 4 | 4 |
| Curability (Skinning time period) | Before storage | 32 min. | 18 min. | 46 min. | 39 min. | 38 min. | 31 min. | 41 min. | 13 min. | 15 min. | 13 min. | 35 min. | 39 min. | 63 min. |
| | After storage | 67 min. | 17 min. | 32 min. | 37 min. | 91 min. | 30 min. | 60 min. | 19 min. | 15 min. | 18 min. | 210 min. | 120 min. | - |
| Storage stability (Change ratio of curability) | | 2.1 | 1.1 | 0.7 | 1.0 | 2.4 | 1.0 | 1.5 | 1.5 | 1.0 | 1.4 | 6.0 | 3.1 | - |

As shown in Table 1, the curable compositions of Examples 1 to 10, in which the guanidine compound was added as a curing catalyst and the methyl ester group-containing compound was added, each showed good curability, and maintained good curability even after storage. In other words, the curable compositions each were excellent in storage stability. In contrast, in Comparative Examples 1 and 2, in which the methyl ester group-containing compound was not added, the curability was greatly impaired after storage, and the curable compositions showed poor storage stability. In Comparative Example 3, in which the phthalate ester plasticizer was not added and the polyether plasticizer was added, the curability was insufficient and required improvement.

### INDUSTRIAL APPLICABILITY

The curable composition of the present invention may be suitably used in applications such as pressure-sensitive adhesives; sealants for various uses such as buildings, ships, automobiles, and roads; adhesives; impression materials; vibration-proof materials; damping materials; soundproof materials; expanded/foamed materials; coating compositions; and spray coatings. The curable composition is more preferably used in such applications as sealants and adhesives because the cured product to be provided is excellent in flexibility and adhesiveness.

The curable composition of the present invention may also be used in various applications such as electric and electronic part materials such as back-cover sealants for solar cells; electric insulating materials such as insulating cover materials for electric wires and cables; elastic adhesives; contact adhesives; spray sealants; crack repair materials; tiling adhesives; powder coating compositions; casting materials; rubber materials for medical use; pressure-sensitive adhesives for medical use; sealants for medical devices; food packaging materials; joint sealants for siding boards and other exterior materials; coating materials; primers; electromagnetic-wave-shielding conductive materials and thermally conductive materials; hot melt materials; potting agents for electrics and electronics; films; gaskets; various molding materials; rustproof and waterproof sealants for wired glass and laminated-glass edges (cut end faces); and liquid sealants for use in automotive parts, electrical machinery parts, and various machinery parts.

Further, the curable composition may also be used as various sealing compositions and adhesive compositions because it, either alone or with the aid of a primer, may adhere to a wide range of substrates such as glass, ceramics, wood, metals, and molded resin products.

The curable composition of the present invention may also be used as interior panel adhesives, exterior panel adhesives, tiling adhesives, stone pitching adhesives, ceiling finishing adhesives, floor finishing adhesives, wall finishing adhesives, vehicle panel adhesives, adhesives for assembling electric, electronic and precision apparatuses, direct glazing sealants, double glazing sealants, sealants for SSG systems, and working joint sealants for buildings.

## Claims

1. A curable composition, comprising:
(A) an organic polymer having a silyl group cross-linkable by siloxane bond formation;
(B) a guanidine compound represented by formula (1):
R¹N=C(NR¹₂)₂ (1)
wherein any one of five R¹s is an organic group, and the other four R¹s are each independently one selected from a hydrogen atom; a saturated hydrocarbon group; -C(=NR²)-NR²₂ wherein three R²s are each independently a hydrogen atom or an organic group; and =C(-NR²₂)₂ wherein four R²s are each independently a hydrogen atom or an organic group; and
(C) a methyl ester group-containing compound,
wherein the organic polymer (A) has a polyoxyalkylene polymers as a main chain skeleton, and
wherein the methyl ester group-containing compound (C) is at least one selected from the group consisting of dimethyl malonate, dimethyl succinate, dimethyl glutarate, dimethyl adipate, dimethyl sebacate, methyl acetate, methyl propionate, methyl butyrate, methyl valerate, methyl caprylate, methyl caprate, methyl laurate, methyl myristate, methyl palmitate, methyl stearate, methyl oleate, methyl ricinoleate, and methyl cocoate.

2. The curable composition according to claim 1, further comprising
(D) a phthalate ester plasticizer.

3. The curable composition according to claim 1 or 2,
wherein the polyoxyalkylene polymer is a polyoxypropylene polymer.

4. The curable composition according to any one of claims 1 to 3,
wherein the guanidine compound (B) has an aryl group as any one of the five R¹s in formula (1).

5. The curable composition according to claim 4,
wherein the guanidine compound (B) is at least one selected from the group consisting of 1-phenylguanidine, 1-(o-tolyl)guanidine, 1-phenylbiguanide, and 1-(o-tolyl)biguanide.

6. The curable composition according to any one of claims 1 to 5,
wherein the methyl ester group-containing compound (C) has a molecular weight of 100 to 500.

7. The curable composition according to any one of claims 1 to 6,
wherein the methyl ester group-containing compound (C) has a primary carbon atom or a secondary carbon atom at an α-position of the methyl ester group.

8. The curable composition according to any of claims 1 to 7,
wherein the methyl ester group-containing compound (C) is at least one selected from the group consisting of dimethyl malonate, dimethyl succinate, dimethyl glutarate, dimethyl adipate, dimethyl sebacate, methyl propionate, methyl butyrate, methyl valerate, methyl caprylate, methyl caprate, methyl laurate, methyl myristate, methyl palmitate, methyl stearate, methyl oleate, and methyl cocoate.

9. A sealant, comprising the curable composition according to any one of claims 1 to 8.

10. An adhesive, comprising the curable composition according to any one of claims 1 to 8.

11. A cured product, which is produced from the curable composition according to any one of claims 1 to 8.

## Patentansprüche

1. Härtbare Zusammensetzung, umfassend:
(A) ein organisches Polymer mit einer Silylgruppe, die über die Bildung einer Siloxanbindung quervernetzbar ist,
(B) eine durch Formel (1) dargestellte Guanidinverbindung:
R¹N=C(NR¹₂)₂ (1)
wobei irgendeines der fünf R¹s eine organische Gruppe ist und die anderen vier R¹s jeweils unabhängig eines sind, das aus einem Wasserstoffatom, einer gesättigten Kohlenwasserstofifgruppe, -C(=NR²)-NR²₂, wobei drei R²s jeweils unabhängig ein Wasserstoffatom oder eine organische Gruppe darstellen, und
=C(-NR²₂)₂, wobei vier R²s jeweils unabhängig ein Wasserstoffatom oder eine organische Gruppe darstellen, ausgewählt ist, und
(C) eine methylestergruppenhaltige Verbindung,
wobei das organische Polymer (A) ein Polyoxyalkylenpolymer als Hauptkettenskelett aufweist und
wobei die methylestergruppenhaltige Verbindung (C) wenigstens eine ist, die aus der aus Dimethylmalonat, Dimethylsuccinat, Dimethylglutarat, Dimethyladipat, Dimethylsebacat, Methylacetat, Methylpropionat, Methylbutyrat, Methylvalerat, Methylcaprylat, Methylcaprat, Methyllaurat, Methylmyristat, Methylpalmitat, Methylstearat, Methyloleat, Methylricinoleat und Methylcocoat bestehenden Gruppe ausgewählt ist.

2. Härtbare Zusammensetzung nach Anspruch 1, ferner umfassend
(D) einen Phthalatesterweichmacher.

3. Härtbare Zusammensetzung nach Anspruch 1 oder 2,
wobei das Polyoxyalkylenpolymer ein Polyoxypropylenpolymer ist.

4. Härtbare Zusammensetzung nach einem der Ansprüche 1 bis 3,
wobei die Guanidinverbindung (B) eine Arylgruppe als einen der fünf R¹s in Formel (1) aufweist.

5. Härtbare Zusammensetzung nach Anspruch 4,
wobei die Guanidinverbindung (B) wenigstens eine ist, die aus der aus 1-Phenylguanidin, 1-(o-Tolyl)-guanidin, 1-Phenylbiguanid, und 1-(o-Tolyl)-biguanid bestehenden Gruppe ausgewählt ist.

6. Härtbare Zusammensetzung nach einem der Ansprüche 1 bis 5,
wobei die methylestergruppenhaltige Verbindung (C) ein Molekulargewicht von 100 bis 500 aufweist.

7. Härtbare Zusammensetzung nach einem der Ansprüche 1 bis 6,
wobei die methylestergruppenhaltige Verbindung (C) ein primäres Kohlenstoffatom oder ein sekundäres Kohlenstoffatom an einer α-Position der Methylestergruppe aufweist.

8. Härtbare Zusammensetzung nach einem der Ansprüche 1 bis 7,
wobei die methylestergruppenhaltige Verbindung (C) wenigstens eine ist, die aus der aus Dimethylmalonat, Dimethylsuccinat, Dimethylglutarat, Dimethyladipat, Dimethylsebacat, Methylpropionat, Methylbutyrat, Methylvalerat, Methylcaprylat, Methylcaprat, Methyllaurat, Methylmyristat, Methylpalmitat, Methylstearat, Methyloleat und Methylcocoat bestehenden Gruppe ausgewählt ist.

9. Dichtung, umfassend die härtbare Zusammensetzung nach einem der Ansprüche 1 bis 8.

10. Adhäsiv, umfassend die härtbare Zusammensetzung nach einem der Ansprüche 1 bis 8.

11. Gehärteter Gegenstand, der aus der härtbaren Zusammensetzung nach einem der Ansprüche 1 bis 8 hergestellt ist.

## Revendications

1. Composition durcissable, comprenant :
(A) un polymère organique présentant un groupe silyle réticulable par formation de liaison siloxane ;
(B) un composé de type guanidine représenté par la formule (1) :
R¹N = C(NR¹₂)₂ (1)
dans laquelle l'un quelconque des cinq R¹ est un groupe organique, et les quatre autres R¹ sont chacun indépendamment un choisi parmi un atome d'hydrogène; un groupe hydrocarboné saturé; -C(=NR²)-NR²₂ où trois R² sont chacun indépendamment un atome d'hydrogène ou un groupe organique; et =C(-NR²₂)₂ où les quatre R² sont chacun indépendamment un atome d'hydrogène ou un groupe organique; et
(C) un composé contenant un groupe ester méthylique,
dans laquelle le polymère organique (A) présente un polymère de type polyoxyalkylène, en tant que squelette de chaîne principale, et
dans laquelle le composé contenant un groupe ester méthylique (C) est au moins un choisi dans le groupe constitué de malonate de diméthyle, succinate de diméthyle, glutarate de diméthyle, adipate de diméthyle, sébaçate de diméthyle, acétate de méthyle, proprionate de méthyle, butyrate de méthyle, valérate de méthyle, caprylate de méthyle, caprate de méthyle, laurate de méthyle, myristate de méthyle, palmitate de méthyle, stéarate de méthyle, oléate de méthyle, ricinoléate de méthyle, et cocoate de méthyle.

2. Composition durcissable selon la revendication 1, comprenant de plus
(D) un plastifiant de type ester de phthalate.

3. Composition durcissable selon la revendication 1 ou 2,
dans laquelle le polymère de polyoxyalkylène est un polymère de type polyoxypropylène.

4. Composition durcissable selon l'une quelconque des revendications 1 à 3,
dans laquelle le composé de type guanidine (B) présente un groupe aryle comme l'un des cinq R¹ dans la formule (1).

5. Composition durcissable selon la revendication 4,
Dans laquelle le composé de type guanidine (B) est au moins un choisi dans le groupe constitué de 1-phénylguanidine, 1-(o-tolyl)guanidine, 1-phénylbiguanide, et 1-(o-tolyl)biguanide.

6. Composition durcissable selon l'une quelconque des revendications 1 à 5,
dans laquelle le composé contenant un groupe ester méthylique (C) présente une masse moléculaire de 100 à 500.

7. Composition durcissable selon l'une quelconque des revendications 1 à 6,
dans laquelle le composé contenant un groupe ester méthylique (C) présente un atome de carbone primaire ou un atome de carbone secondaire à une position α du groupe ester méthylique.

8. Composition durcissable selon l'une quelconque des revendications 1 à 7,
dans laquelle le composé contenant un groupe ester méthylique (C) est au moins un choisi dans le groupe constitué de malonate de diméthyle, succinate de diméthyle, glutarate de diméthyle, adipate de diméthyle, sébaçate de diméthyle, propionate de méthyle, butyrate de méthyle, valérate de méthyle, caprylate de méthyle, caprate de méthyle, laurate de méthyle, myristate de méthyle, palmitate de méthyle, stéarate de méthyle, oléate de méthyle, et cocoate de méthyle.

9. Produit d'étanchéité, comprenant la composition durcissable selon l'une quelconque des revendications 1 à 8,

10. Adhésif, comprenant la composition durcissable selon l'une quelconque des revendications 1 à 8.

11. Produit durci, lequel est produit à partir de la composition durcissable selon l'une quelconque des revendications 1 à 8.
